# EUROPEAN PATENT SPECIFICATION

(11) **EP 2 418 238 B1**
(45) Date of publication and mention of the grant of the patent: **17.04.2013**
(21) Application number: 10425272.1
(22) Date of filing: 11.08.2010
(51) Int. Cl.: C08J 7/06, B01J 21/06, B05D 5/00, C09G 1/00, B01J 31/06, B01J 35/00, B01J 37/03, C01G 23/053, C08J 9/36, C09C 1/36, B01J 37/02

(54) **Titanium dioxide-coated expanded polymer sheet having photocatalytic activity, container and packaging for foodstuffs obtained from such polymer sheet**
Geschäumte Kunststofffolie, die mit Titandioxid beschichtet ist und eine photokatalytische Aktivität aufweist, daraus hergestellte Behälter und Verpackung für Lebensmittel
Feuille de polymère expansée recouverte de dioxyde de titane ayant une activité photocatalytique, récipient et emballage pour produits alimentaires à partir de cette feuille

(43) Date of publication of application: 15.02.2012
(73) Proprietor: SIRAP-GEMA S.p.A., I-25028 Verolanuova (Brescia) (IT)
(72) Inventor: Garavaglia, Luigi, 25028 Verolanuova (Brescia) (IT); Brazzoli, Matteo, 25028 Verolanuova (Brescia) (IT); Palmisano, Giovanni, 90128 Palermo (IT); Palmisano, Leonardo, 90128 Palermo (IT); Loddo, Vittorio, 90128 Palermo (IT); Marci, Giuseppe, 90128 Palermo (IT); Yurdakal, Sedat, 90128 Palermo (IT)
(74) Representative: Zambardino, Umberto

(56) References cited:
- WO-A2-2006/043166
- WO-A2-2008/010196
- DE-A1-102005 019 895
- DE-A1-102006 038 593

## Description

### Field of the invention

The present invention relates in general to the technical field of packaging food products in containers/packages of expanded plastics material.

More particularly, the present invention relates to a method for the production of a polymer leaf of expanded polymeric material, in particular an extruded expanded polymeric material with substantially closed cells coated with titanium dioxide (TiO₂) as well as to methods for the production of a container and a package for foodstuffs from said polymer leaf.

The present invention also relates to a polymer leaf of expanded polymeric material, in particular an extruded expanded polymeric material with substantially closed cells coated with titanium dioxide (TiO₂) as well as to a container and a package for foodstuffs comprising said polymer leaf.

### Background of the invention

The use of a tray or container of expanded polymeric material for packaging foodstuffs is very widespread, especially for retail sale in supermarkets.

However, foodstuff packages of expanded polymeric material do not always ensure sufficient preservation over time of the hygienic, nutritional and organoleptic characteristics of the foodstuffs contained therein.

In order to extend the shelf life of foodstuffs, in particular of highly perishable foodstuffs, for as long as possible while keeping their organoleptic, nutritional and hygienic characteristics unchanged, it is conventional to use packaging techniques which involve vacuum treatment or the removal of air from the package and simultaneous replacement with an appropriate gas mixture (protective atmosphere packaging).

Over the past decade, however, the exploitation of photocatalysis based on the use of a film of titanium dioxide (TiO₂) in crystalline form has found ever more numerous practical applications, including in the foodstuffs sector. Titanium dioxide in crystalline form is an extremely photoactive, stable, non-toxic and inexpensive inorganic semiconductor which is approved by the Food and Drug Administration (FDA) for use in foodstuffs and in materials which come into contact with foodstuffs.

Titanium dioxide exhibits properties such that it is capable, when irradiated with ultraviolet light (UV), of degrading organic contaminants present either in aqueous solvents or in air. It has furthermore been found that titanium dioxide is capable of causing irreparable damage affecting bacterial and fungal cell structures and is thus capable of performing an antimicrobial action. Sunlight comprises a small percentage of ultraviolet radiation and titanium dioxide films are thus active also under solar irradiation.

One of the commonest methods of producing titanium dioxide involves a first step of thermal hydrolysis of an inorganic precursor (typically titanium tetrachloride) so as to obtain a sol or gel of hydrated TiO₂ in aqueous solution, from which TiO₂ films are deposited by means of dip coating or spin coating techniques (or other less common methods) and a second step in which the resultant film, upon exposure to a temperature of 350°C, crystallises and assumes an active allotropic form.

However, the application of a TiO₂ film layer onto thermolabile polymers, such as the expanded polymers forming tubs or containers for foodstuffs, is associated with major technical difficulties such that the result obtained by means of known methods is not always satisfactory.

The expanded polymeric materials forming such tubs or containers are, in fact, intrinsically hydrophobic and are thus not readily wettable with the more conventional sol-gel preparations which give rise to TiO₂. Furthermore, many polymers tend to undergo changes when the temperature rises, so preventing calcination of the film deposited in amorphous form. Normally, in fact, a temperature of greater than or equal to 350°C is required to achieve crystallisation of the film, a temperature which is not compatible with the expanded polymeric material forming the above-stated food packages. Crystallisation, as well as the type of crystallisation of the TiO₂ film is, however, essential to impart the desired photocatalytic activity to the latter.

In order to overcome these drawbacks, it has in the past been attempted to use a sol of TiO₂ which is already photocatalytically active for deposition onto polymer, the sol being obtained for example by preparing an aqueous solution of a commercial TiO₂ which is already in crystalline form.

However, while on the one hand this solution provides satisfactory photocatalytic activity, on the other hand the adhesion and uniformity of the TiO₂ on the polymer is rather poor.

Other solutions involve depositing an intermediate layer between the polymer and TiO₂ which has properties common to both, the intermediate layer containing organic groups and other inorganic groups, or modifying the titanium dioxide by attaching hydrophobic aromatic polymer species thereto, such as for example poly(ether sulfone).

These solutions improve the adhesion of the TiO₂ to the polymer but at the same time its catalytic activity is compromised or at least made unsatisfactory.

Furthermore, some additives may cause the degradation of the stability of the titanium dioxide solution, causing the formation of precipitates, chemical reactions, phase separation etc.. Other solutions, finally, may involve very high costs and/or highly complex procedures, or cause a screening effect of the photocatalytic activity of TiO₂ which is only active upon irradiation.

DE 10 2005 019895 discloses a method for coating a substrate surface with titanium bioxide (TiO₂) which includes the steps of a) mixing an organic TiO₂ precursor (e.g. titanium isopropoxide) with an acidic aqueous solution, b) hydrolysing said precursor to yield a TiO₂ sol., c) applying the TiO₂ sol - to which an organic compound is added - to the surface of a substrate (which may be made of polymeric material) and d) performing a post-treatment to degrade the organic compound and convert TiO₂ in the photocatalytically active state.

The technical problem underlying the present invention is thus that of providing a method for producing a polymer leaf of expanded material coated with TiO₂ and, therefrom, a container and/or package for foodstuffs which makes it possible to obtain a polymer leaf of expanded material with good adhesion properties of the TiO₂ on the expanded material and, simultaneously, good photocatalytic activity of the TiO₂.

### Summary of the invention

The above-stated technical problem is solved according to the invention by a method for producing a polymer leaf of expanded polymeric material coated with titanium dioxide (TiO₂) on at least one of the surfaces thereof, the method comprising the steps of:
a) mixing an organic TiO₂ precursor with an acidic aqueous solution;
b) hydrolysing said organic TiO₂ precursor in said acidic solution to yield a TiO₂ sol or suspension in which said TiO₂ is in a substantially crystalline and photocatalytically active form with particles of nanometric and/or sub-nanometric dimensions;
c) optionally converting said TiO₂ sol into a TiO₂ gel, said TiO₂ gel subsequently being mixed with an alcohol;
d) applying said TiO₂ sol or suspension, or said TiO₂ gel mixed with alcohol, onto a leaf of expanded polymeric material in such a manner as to coat at least one surface of the polymer leaf with a film of TiO₂ in which said TiO₂ is substantially in a photocatalytically active crystalline form with particles of nanometric and/or sub-nanometric dimensions.

According to a preferred embodiment, the TiO₂ of the sol or suspension obtained in step b) has a substantially crystalline form in the sole anatase phase.

According to another embodiment of the method of the invention, in step c) the TiO₂ sol is subjected to dialysis thus obtaining a TiO₂ gel and said TiO₂ gel is mixed with an alcohol.

### Detailed description of the invention

In the present description, the term "TiO₂ sol" and "TiO₂ suspension" is taken to mean a colloidal dispersion of particles of TiO₂ in a crystalline form which is active from the photocatalytic standpoint in an aqueous phase in which the particles (namely the crystals) of TiO₂ are of substantially nanometric and/or sub-nanometric dimensions.

Compared to the sol, a TiO₂ suspension comprises crystals of larger but still nanometric dimensions. Typically, in the present invention, the TiO₂ sol appears substantially transparent or slightly opaque with crystals of dimensions of less than 10 nm, while the TiO₂ suspension appears essentially opaque and white in colour with crystals of dimensions greater than or equal to 10 nm, preferably in the 10-100 nm range.

The term "TiO₂ gel" is taken to mean a solid colloidal material obtained from the TiO₂ sol, in which the TiO₂ is in a crystalline form which is active from the photocatalytic standpoint and comprises particles (namely crystals) of TiO₂ having substantially nanometric dimensions.

As in the case of the sol mentioned above, the gel is transparent, but has a viscosity very much higher than that of the sol.

The term "expanded polymer leaf" is taken to mean a sheet (commonly referred to as leaf) of expanded or semi-expanded polymeric material obtained by means of a process of extrusion of a polymeric material mixed with at least one blowing agent of a chemical and/or physical nature. Such a sheet or leaf of expanded or semi-expanded polymeric material typically has a density of between 30 g/l and 1000 g/l.

In the method according to the invention, the organic TiO₂ precursor is preferably selected from titanium tetraisopropoxide and titanium tetraisobutoxide. Titanium tetraisopropoxide is particularly preferred.

More generally, it is possible to use a titanium alkoxide having the formula Ti(OR)₄, in which R is a linear or branched C₁-C₆ alkyl group as the organic precursor.

The organic precursor is preferably mixed into the acidic aqueous hydrolysis solution in a proportion comprised in the range of 1-25% vol./vol. (i.e. volume of organic precursor to volume of the above-stated acidic aqueous solution), preferably in the range of 5-15% vol./vol.

In step b), the acid present in the aqueous solution advantageously catalyses the hydrolysis reaction of the titanium dioxide organic precursor.

The acid in the aqueous solution used for hydrolysing the organic precursor may be organic and/or inorganic and is preferably selected from the group comprising acetic acid, nitric acid, formic acid and combinations thereof.

It is particularly preferred to use nitric acid with the aim of achieving optimum hydrolysis of the TiO₂ precursor.

Using organic acids such as acetic acid or formic acid has beneficial effects on the stability of the TiO₂ sol or suspension obtained by hydrolysis of the organic precursor which may thus be stored for relatively long periods of time prior to subsequent use for application to the polymer leaf or for conversion into gel.

In any event, even in the absence of organic acids it is possible to obtain a sufficiently stable TiO₂ sol or suspension provided that the quantity of organic TiO₂ precursor mixed into the aqueous hydrolysis solution used in step a) is less than 10% vol./vol.. In such a case, the resultant TiO₂ sol or suspension has limited stability over time and must be used within a short time for application to the polymer leaf or conversion into gel.

When preparing the TiO₂ sol or suspension according to step b), it is particularly preferred to use an acidic aqueous solution containing 0.1-5% (vol./vol.) of nitric acid (originating for example from a concentrated aqueous solution such as a 65 vol.% solution) and 0-10% (vol./vol.) of acetic acid (originating for example from a concentrated aqueous solution such as a 99 vol.% solution), the organic precursor then being added to said acidic aqueous solution in a proportion of 1-25% (vol./vol.), preferably of 5-15% vol. /vol..

In the method according to the invention, step b) is performed at a temperature of between room temperature (for example 25°C) and the boiling temperature of the solvent (water) for a period of time generally of between 10 minutes and 30 hours, the time for which hydrolysis is carried out varying as required, for example depending on the crystal form and/or the specific preselected crystal dimensions for the TiO₂.

In particular, when obtaining a TiO₂ sol, step b) is preferably performed at a temperature of between 40°C and 80°C for a period of 4-24 hours, more preferably of 16 hours.

In such a case, the temperature and reaction time are controlled in such a manner as to avoid TiO₂ precipitation phenomena which would result in particle agglomerates of TiO₂ being obtained (for example opaque suspensions), rather than a transparent sol with TiO₂ particles of nanometric and/or sub-nanometric dimensions according to the invention.

When obtaining a TiO₂ suspension, step b) is preferably performed at a temperature of between 90°C and the boiling temperature of the solvent for a period of time of between 10 minutes and 30 hours.

According to one embodiment of the invention which is particularly preferred for obtaining a TiO₂ suspension, step b) is performed in a closed vessel.

Step c) is preferably performed using a dialysis membrane having a pore *cut off* size appropriate for allowing the removal of ionic species originating from the additives (acid/acids) used in the hydrolysis step b).

Said membrane preferably consists of a cellulose membrane having a pore *cut off* size of MW 12.400.

In a preferred embodiment, dialysis is performed by placing the sol obtained in step b) in a dialysis membrane for a period of between 24 and 72 hours, preferably 48 hours, so as to remove ionic species originating from the acid or acids used in step b) and to increase the pH of the TiO₂ sol.

The dialysis step c) is preferably carried out for a period which is necessary to obtain a final TiO₂ gel with a pH of between 4 and 5.

Step c) advantageously does not involve any loss of TiO₂.

In the method according to the invention, the TiO₂ gel obtained in step c) is mixed at room temperature and with stirring (for example by means of a magnetic stirrer) with an alcohol added in a proportion of between 10 and 20% vol./vol. (i.e. volume of added alcohol relative to gel volume).

The alcohol is preferably selected from the group comprising ethanol, 2-propanol (isopropanol), isobutanol. It is particularly preferred to use ethanol for mixing with the TiO₂ gel obtained in step c).

The quantity of alcohol, in particular ethanol, is an important parameter if uniform, adhesive films are to be obtained. This is because an excessive volume of ethanol results in phase separation (gel-ethanol), while excessively small quantities of ethanol give rise to films which do not adhere well to the polymer substrate.

Advantageously, the concentration of TiO₂ in crystalline form and with particles of nanometric and/or sub-nanometric dimensions in the sol, in the suspension or in the gel is between 0.2 and 10% by weight relative to the weight of sol or gel, preferably between 1.0 and 5.0%.

In step d) of the method according to the invention, application of the TiO₂ sol, suspension or gel onto the leaf of expanded polymeric material may be carried out by means of *per se* conventional TiO₂ film deposition methods, such as for example immersion in a bath (dip coating), spraying (spray coating) or simple coating followed by removal of the solvent by evaporation and/or heating. The gel may furthermore also be applied by manual or automatic spreading by means of appropriate spreading blades. This latter method is, however, less useful in the case of the sol and suspensions due to the low viscosity of these, which does not permit good adhesion to the leaf. The spraying method is thus generally preferred for the sol and suspensions because this method, by atomising the sol or the suspension, allows rapid evaporation of the solvent (water) after application onto the leaf, and thus faster and more satisfactory adhesion.

It should furthermore be noted that, by virtue of its transparency, the sol is preferred for application onto polymer leaf (and onto containers and packages obtained therefrom) when it is desired to obtain a coating of a transparent TiO₂ film.

Conversely, application of the suspension provides a coating which is generally opaque. However, the suspension will generally have greater activity, and thus effectiveness, than the sol since the larger dimensions of the particles, which are thus more highly crystallised, permit greater photocatalytic activity of the film on the leaf.

The TiO₂ film is deposited onto at least one of the surfaces of the leaf of expanded polymeric material and may be deposited over all or part of the surface.

For example, the dip coating procedure involves immersing the polymer leaf into a bath of the TiO₂ sol, suspension or gel for a predetermined time followed by removal of the solvent from the polymer leaf taken out of the bath by evaporation or heating.

The above-mentioned procedures may be repeated a predetermined number of times depending on the thickness of the TiO₂ coating film desired on said polymer leaf.

If the solvent is removed by heating, heating is performed at a temperature below that at which structural modification of the polymer leaf and changes in the physicochemical and mechanical properties of the polymer itself occur.

Advantageously, deposition of the TiO₂ onto the expanded polymer leafs and heating of the expanded polymer leafs coated with TiO₂ may be carried out continuously so as to reduce industrial production times, with *per se* conventional continuous dryers or desiccators for example being used for heating.

In the method according to the invention, the expanded polymeric material forming the polymer leaf consists of a polymer selected from the group comprising polystyrene or polystyrol, preferably bi-oriented polystyrene (OPS) and extruded expanded polystyrene (XPS), polyethylene terephthalate (PET) and polypropylene (PP).

Said expanded polymeric material is preferably obtained with substantially closed cells. Extruded expanded polystyrene with substantially closed cells is particularly preferred.

The polymer leaf formed by the above-stated expanded plastics materials may be obtained by normal methods of extruding a mixture comprising the selected polymer and at least one blowing agent of a chemical and/or physical nature, which mixture is melted in an extruder and then extruded through the extruder die so as to form a sheet (commonly referred to as leaf) of expanded material.

In the event that the polymer leaf is of XPS, a TiO₂ sol or suspension as obtained in step b) is preferably applied thereto, while, when the polymer leaf is of PET, OPS or PP, a gel as obtained in step c) is applied to the leaf.

In this manner, optimum adhesion properties of the TiO₂ films to the polymer are obtained simultaneously combined with optimum photocatalytic activity of the TiO₂ towards volatile organic substances, such as those released by foodstuffs and food products during storage.

The sol, suspension or gel is preferably applied onto the polymer leaf in such a manner as to form a coating consisting of a TiO₂ film having an overall thickness of between 100 nm and 50 µm, preferably between 300 nm and 1.5 µm.

If the overall thickness of the TiO₂ coating is less than 100 nm, in fact, while good adhesion to the polymer leaf of expanded material is achieved, the content of TiO₂ particles is insufficient to achieve satisfactory degradation of organic substances released by foodstuffs and/or food products during storage.

Conversely, an overall thickness of the TiO₂ coating of greater than 50 µm does not provide significant advantages over a lesser thickness, in particular with regard to photocatalytic activity.

It has surprisingly been found that the method according to the invention gives rise to a polymer leaf coated with TiO₂ which simultaneously exhibits good adhesion properties of the TiO₂ to the expanded polymer and good photocatalytic activity properties towards volatile organic substances, in particular volatile organic substances normally released by foodstuffs and/or food products during storage.

In particular, the good photocatalytic activity of the TiO₂ coating on the polymer leafs of expanded material according to the invention is also due to the fact that the TiO₂ is obtained directly in active crystalline form, thus without there being any need to carry out subsequent crystallisation which, as has already been explained above, is however impracticable on polymer supports.

Furthermore, without wishing to be tied to any particular scientific theory, it is thought that the nanometric dimension of the TiO₂ particles forming the coating of the polymer leaf is such that said TiO₂ particles, having dimensions smaller than those of the pores of the expanded polymer support, manage to penetrate into said pores of the polymer and are consequently better retained thereon.

It should furthermore be noted that the method according to the invention is simple and economic to carry out and is readily applicable to large scale industrial production.

The present invention also relates to a polymer leaf of expanded material obtained by the above-stated method. Such a leaf is characterised in that, on at least one of its surfaces, it has a coating formed by a film of TiO₂ in crystalline form and having TiO₂ particles of nanometric and/or sub-nanometric dimensions, preferably of no greater than 100 nm.

The polymer leaf coated with TiO₂ according to the invention exhibits good photocatalytic activity properties (even when the coating is not homogeneous) with regard to the degradation of volatile organic substances, in particular ethylene, 2-propanol (or isopropanol), and/or trimethylamine, as will be better illustrated below in the examples.

The polymer leaf according to the invention is thus advantageously suitable for use for producing containers and/or packages for foodstuffs, bearing in mind, in fact, that such organic substances are often released by the foodstuffs during storage thereof and are responsible for their perishability, so that the photocatalytic action of the TiO₂ as coating of the expanded polymer makes it possible to degrade such substances thus extending the shelf life of the packaged foodstuff.

At the same, it has been found that titanium dioxide also has an antimicrobial action, so further contributing to the preservation of the packaged foodstuff.

The present invention thus also relates to containers and packages for foodstuffs comprising a polymer leaf coated with TiO₂ as described above.

The containers may be obtained by thermoforming the polymer leaf according to the invention in conventional manner, causing it to assume the desired shape, for example a tray or tub.

For example, thermoforming of the polymer leaf of expanded material coated with TiO₂ may be carried out in a suitable mould at a temperature in the 160-220°C range. In particular, thermoforming operations may be carried out in sequence in a single mould or in various moulds using appropriate conventional methods, such as for example vacuum suction, injection of compressed air, mechanical methods etc.

In such containers, the coating of crystalline and photocatalytically active TiO₂ is present at least on the internal surface thereof, namely on the surface facing towards the foodstuff/food product to be packaged and optionally in contact with said foodstuff/food product.

Optionally, the polymer leaf of expanded material may be coupled on the opposite surface to that intended for coating with TiO₂ or also already coated with TiO₂ with a sheet or film of expanded or non-expanded polymeric material depending on incidental and specific requirements.

Such coupling may be carried out by means of hot lamination, by using adhesives or with other means.

Coupling by means of hot lamination is particularly preferred. For example, the sheet of expanded polymeric material obtained by conventional methods of annular or flat head extrusion with injection of gaseous blowing agents may be hot laminated with a non-expanded film or sheet obtained by coextrusion or subsequently extruded by means of the method of "extrusion coating", so obtaining a composite leaf.

Such a composite leaf is then coated with a film of TiO₂ by deposition of the TiO₂ sol, suspension or gel in accordance with the above-mentioned methods on the free (i.e. non-coupled) surface of the expanded polymeric material and then the composite leaf coated with TiO₂ film is conventionally thermoformed in such a manner as to obtain a container, for example a tray or tub.

The packages according to the invention comprise:
- a container comprising a layer composed of an expanded polymeric material coated on at least the surface facing towards the foodstuff with a film of crystalline TiO₂ and having particles of substantially nanometric and/or sub-nanometric dimensions, the container having a bottom and side walls finishing at the top in a peripheral edge,
- a foodstuff and/or food product arranged on the bottom of said container,
- means for sealing said container.

The means for sealing the container are *per se* conventional and may consist, for example, of a monolayer or multilayer sealing film, of a plastics material made to adhere to the peripheral edge of said container or of a PVC or PE type stretch film in which the container is wrapped or alternatively the container may be inserted in a heat-shrink or stretch flowpack.

The tubs and containers according to the invention are suitable for use in the context of the food industry because TiO₂ is non-toxic. Moderately and particularly perishable foodstuffs may thus be packaged in the tubs and containers of the invention to form a package for the storage and wholesale and retail sale of a variety of foodstuffs including, without limitation, fruit, vegetables, meat, fish, cheese, cured meats, nuts, dried fruit, ready meals for storage at room temperature or in a refrigerated environment, for example in refrigerated display units for bars and supermarkets, for example for self service, or in automatic vending machines, snacks, ice creams, confectionery, pastries, and for transporting the same. The tubs and containers of the present invention are furthermore suitable for storing fresh cut flowers.

Such packages would be particularly suitable in association with highly perishable foodstuffs, meat, fish and dairy products to ensure longer preservation while maintaining microbial safety.

The present invention will be described in greater detail making reference to some embodiments stated below by way for illustrative and not limiting purposes with reference to the attached figures.

### Brief description of the figures

In the figures:
- Figure 1 shows Raman spectra of XPS and PP polymer leafs coated with TiO₂ film;
- Figures 2 and 3 show scanning electron micrographs with a magnification of 100x and 2000x respectively of a sample of OPS polymer leaf coated with TiO₂ film (5 layers);
- Figure 4 shows a scanning electron micrograph with a magnification of 250x of a sample of PP polymer leaf coated with TiO₂ film (1 layer);
- Figure 5 shows a graph (concentration vs. time) reporting the outcome of a test of the photocatalytic degradation of 2-propanol on XPS polymer leaf coated with TiO₂ from a sol (14 layer film);
- Figure 6 shows a graph (ratio of concentration (C) / initial concentration (Cₒ) vs. time) reporting the outcome of two successive tests of the degradation of ethylene (initial concentration 3 µM) on XPS polymer leaf coated with TiO₂ from a sol (14 layer film);
- Figure 7 shows a graph (ratio of concentration (C) / initial concentration (Cₒ) vs. time) reporting the outcome of a test of the degradation of ethylene at a higher initial concentration than in the tests of Figure 6 (initial concentration 82 µM) on XPS polymer leaf coated with TiO₂ from a sol (14 layer film);
- Figure 8 shows a graph (ratio of concentration (C) / initial concentration (Cₒ) vs. time) reporting the outcome of a test of the degradation of trimethylamine (initial concentration 240 µM) on XPS polymer leaf coated with TiO₂ from a sol (14 layer film);
- Figure 9 shows a graph (concentration vs. time) reporting the outcome of tests of the degradation of 2-propanol on PET polymer leaf coated with TiO₂ from a gel with different numbers of layers (1 layer, 2 layer and 5 layer film respectively);
- Figure 10 shows a graph (ratio of concentration (C)/initial concentration (Cₒ) vs. time) reporting the outcome of tests of the degradation of ethylene (initial concentration 37 µM) on PET polymer leaf coated with TiO₂ from a gel (2 layer film);
- Figure 11 shows a graph (ratio of concentration (C)/initial concentration (Cₒ) vs. time) reporting the outcome of tests of the degradation of trimethylamine (initial concentration 60 µM) on PET polymer leaf coated with TiO₂ from a gel (2 layer film);
- Figure 12 shows a graph (ratio of concentration (C)/initial concentration (Cₒ) vs. time) reporting the outcome of tests of the degradation of ethylene (initial concentration 37 µM) on OPS polymer leaf coated with TiO₂ from a gel (2 layer film);
- Figure 13 shows a graph (concentration vs. time) reporting the outcome of tests of the degradation of trimethylamine (initial concentration 10 µM) on OPS polymer leaf coated with a TiO₂ film from a gel (2 or 5 layers);
- Figure 14 shows a graph (ratio of concentration (C)/initial concentration (Cₒ) vs. time) reporting the outcome of tests of the degradation of ethylene on PP polymer leaf coated with a TiO₂ film from a gel (3 layers) and on PP polymer leaf coated with a TiO₂ film from a sol (10 layers);
- Figure 15 shows a graph (ratio of concentration (C)/initial concentration (Cₒ) vs. time) reporting the outcome of a test of the degradation of trimethylamine (initial concentration 10 µM) on PP polymer leaf coated with a single layer TiO₂ film from a gel;
- Figures 16 and 17 show respective graphs (ratio of concentration (C)/initial concentration (Cₒ) vs. time) reporting the outcome of tests of the degradation of 2-propanol (or isopropanol) on samples of XPS coated with a 3 layer TiO₂ film applied by dip coating from TiO₂ suspensions;
- Figure 18 shows a graph (ratio of concentration (C)/initial concentration (Cₒ) vs. time) reporting the outcome of a test of the degradation of ethylene (introduced into the reactor from outside) on a sample of a tub according to the invention;
- Figure 19 shows a graph (concentration vs. time) reporting the outcome of a test of the degradation of ethylene released by an apple on a sample of a tub according to the invention.

### EXAMPLE 1

### Preparation of the TiO₂ sol according to the invention

Titanium tetraisopropoxide (Ti(OPrⁱ)₄) was used as the organic TiO₂ precursor for this preparation.

An acidic aqueous solution was prepared by mixing 1 ml of HNO₃ (nitric acid), 10 ml of CH₃COOH (acetic acid) and 89 ml of H₂O.

5 ml of Ti(OPrⁱ)₄ were added dropwise to this solution with vigorous stirring. The mixture was kept at 60°C in a closed beaker by means of a water bath heated to a controlled temperature for 16 hours so as to take the hydrolysis of Ti(OPrⁱ)₄ to completion.

The hydrolysis and condensation of Ti(OPrⁱ)₄ with subsequent formation of isopropanol, (CH₃)₂CHOH, and TiO₂ are represented by the following overall reaction:

Ti[OCH(CH₃)₂]₄ + 2H₂O → TiO₂ + 4(CH₃)₂CHOH

The solution (sol), initially whitish, becomes clear after approximately 15 minutes, and after approximately 2 hours begins to exhibit bluish reflections due to the titanium in oxidation state +3 present in the solution.

After 16 hours, the TiO₂ sol was put to its subsequent uses.

### EXAMPLE 2

### Preparation of the TiO₂ gel according to the invention

A TiO₂ sol was produced in accordance with the procedure described in Example 1. The TiO₂ sol obtained after 16 hours of hydrolysis of the Ti(OPrⁱ)₄ was subjected to dialysis using a cellulose membrane with pores cut off size of MW 12.400 and keeping the TiO₂ sol in demineralised water (in a 51 beaker) for 48 hours to remove the ionic species (nitrate and acetate) and raise the pH to a value of between 4 and 5. The water was replaced every 6 hours. A viscous transparent gel with a pH of between 4 and 5 was obtained in this manner.

This gel exhibited elevated stability (up to 1-2 months) if kept at 5°C in a refrigerator.

A certain amount of ethanol was added to the gel (approximately 15% by volume of added ethanol relative to the volume of gel) and, after having stirred the solution for approximately 15 minutes, dip coating was carried out on the polymer leafs.

### EXAMPLE 3

### Dip coating of TiO₂ sol on XPS polymer leaf

The TiO₂ sol obtained in accordance with the procedure described in Example 1 was used to coat XPS polymer leafs having substantially closed cells.

The TiO₂ sol was applied onto the XPS polymer leafs by dip coating with an immersion and withdrawal speed of 96 mm/min. A period of 2 minutes was allowed to elapse between immersion and withdrawal. This procedure, optionally repeated, resulted in the deposition of TiO₂ films having from 1 to 14 layers, and, between application of one layer and the subsequent layer, a gentle heat treatment was carried out at 50°C for 2 hours in accordance with *per se* conventional procedures.

The films deposited in this manner on XPS exhibited very high levels of stability and uniformity.

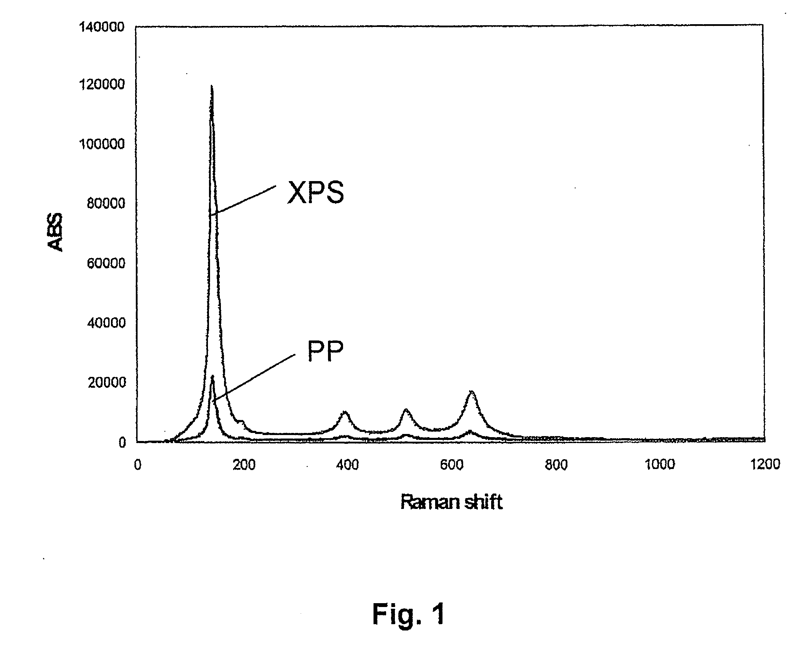

The resultant crystalline phase was investigated by Raman spectroscopy measurements and the anatase phase was observed to be present in the coating films of the XPS polymer leafs. Figure 1 shows a Raman spectrum on an XPS polymer leaf coated with a TiO₂ film in which the four peaks present are those characteristic of the anatase phase.

### EXAMPLE 4

### Dip coating of TiO₂ gel on PET, OPS and PP polymers leafs

The same dip coating procedure as in Example 3 was used to apply the TiO₂ gel obtained in accordance with the procedure described in Example 2 onto PET, OPS and PP polymer leafs, except that TiO₂ films having from 1 to 5 layers were deposited and, between one layer and the subsequent layer, a gentle heat treatment was carried out at 50°C for 2 hours in accordance with *per se* conventional procedures.

The resultant crystalline phase was investigated by Raman spectroscopy measurements and the anatase phase was observed to be present in the coating films of the PET, OPS and PP polymer leafs. Figure 1 shows a Raman spectrum on a PP polymer leaf coated with a TiO₂ film in which the four peaks present are those characteristic of the anatase phase. Similar curves were also obtained for the PET and OPS polymer leafs coated with TiO₂ film.

The above-mentioned samples obtained by dip coating were characterised by scanning electron microscopy.

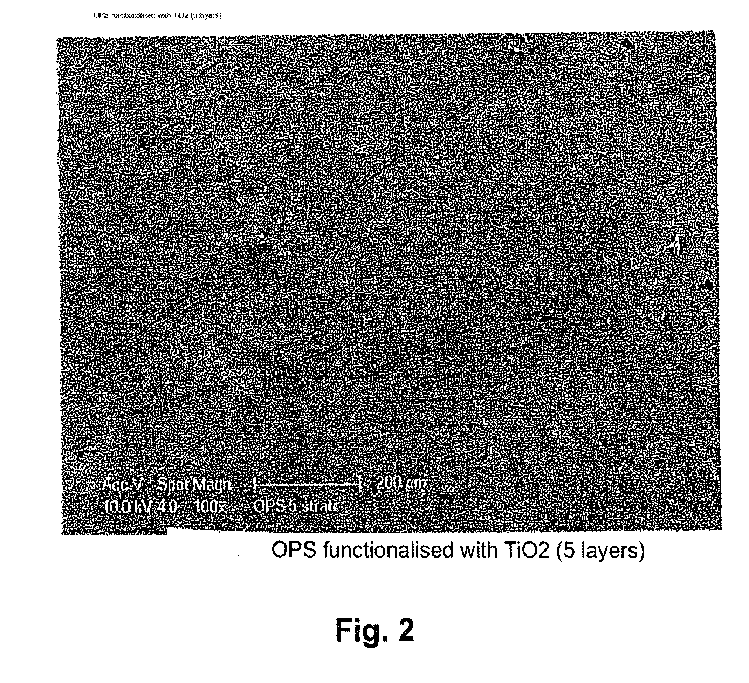

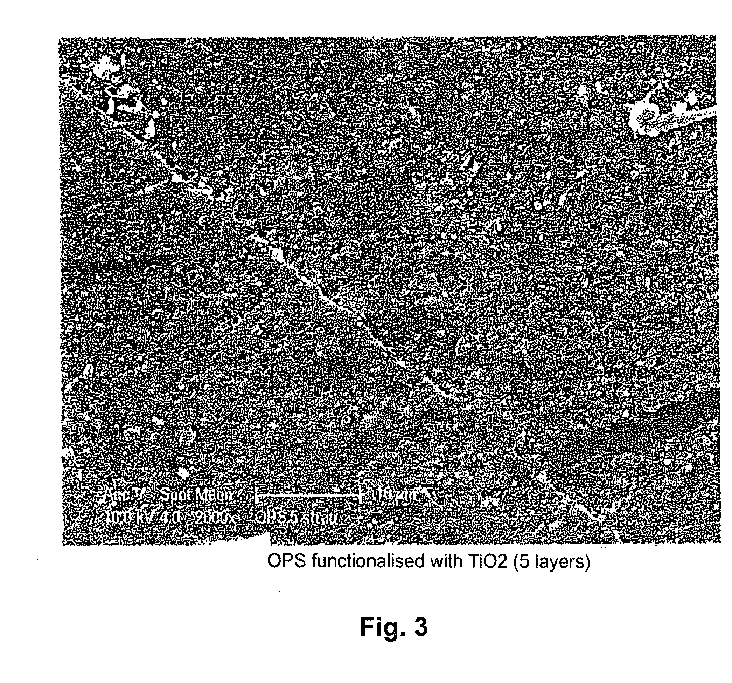

Figures 2 and 3 show scanning electron micrographs with a magnification of 100x and 2000x respectively of a sample of OPS polymer leaf coated with TiO₂ (5 layers). It may be noted that the TiO₂ is distributed substantially uniformly on the polymer support.

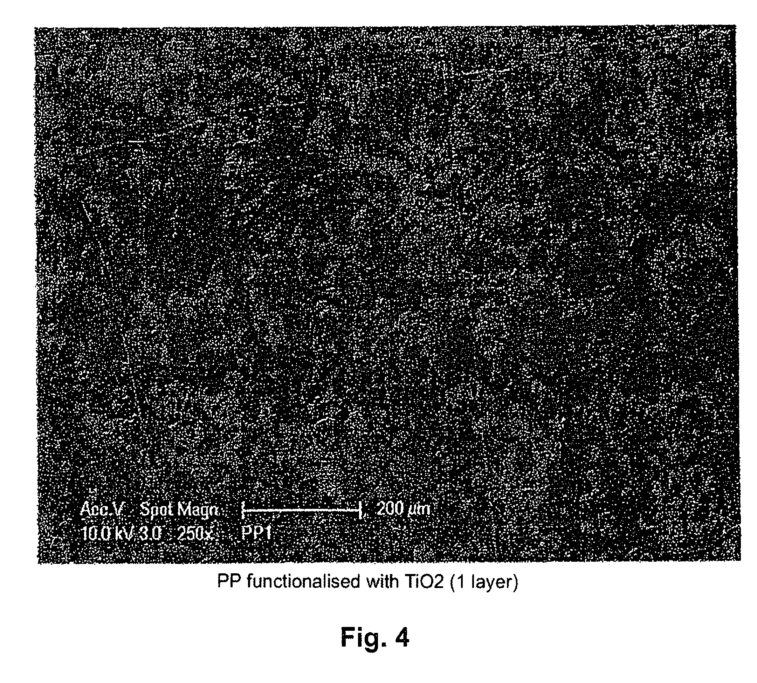

Figure 4, on the other hand, shows a scanning electron micrograph with a magnification of 250x of a sample of PP polymer leaf coated with TiO₂ (1 layer). The distribution of TiO₂ will be noted to be less uniform, as revealed by the presence of laminar islands on the polymer support.

### EXAMPLE 5

### Preliminary stability tests on polymers

Preliminary stability tests on the polymers under investigation (without TiO₂ coating) were carried out under various experimental conditions to ascertain any release of degradation products by said polymers. In particular, thermal stability tests were carried out at 55°C, 75°C, 95°C and 125°C respectively for PET, XPS, OPS and PP as well as stability tests on irradiation in water for the above-stated polymers by measuring TOC (total organic carbon) at predetermined time intervals (up to 5 h after the start of irradiation). Such tests revealed considerable stability of the polymers under investigation, in particular the TOC values remained constant at approximately 1 ppm, concentration values which are typically detected by the instrument in demineralised water.

### EXAMPLE 6

### Photoactivity tests on XPS polymer leafs coated with TiO₂ from a sol by dip coating

Photoactivity tests were carried out on the polymer leafs of Example 3 coated with TiO₂ from a sol by dip coating with regard to gas phase degradation of the following volatile organic substances: 2-propanol, ethylene and trimethylamine.

The photoactivity tests were carried out using a Pyrex glass gas-solid reactor of cylindrical geometry and having a total volume of approximately 0.9 litres. The reactor consisted of two shells held together by a steel ring and an 0-ring gasket was furthermore placed between the parts of the reactor, the function of which gasket was to ensure gas-tightness during the reaction photocatalysed by TiO₂. The reactor was also provided with an inlet orifice and an outlet orifice fitted with respective opening/closing valves and an orifice for gas sampling by means of a 0.5 ml syringe.

The irradiation source used for the reaction was a 400 W medium pressure mercury lamp.

The gaseous samples were analysed by means of a GC-17A Shimadzu gas chromatograph fitted with an HP-1 methyl siloxane column (30 m x 320 µm x 0.25 µm) from Hewlett-Packard and a flame ionisation detector and using helium (He) as carrier gas.

The photoactivity tests on the XPS polymer leafs coated with TiO₂ were carried out in accordance with the procedure described below.

A sample of XPS polymer leaf coated with TiO₂ was arranged on the bottom of the reactor and the reactor was sealed by joining the upper and lower shells together with the steel ring with the O-ring gasket which ensured fluid tightness. After previously saturating the reactor with oxygen, a predetermined quantity of the volatile substance to be degraded photocatalytically (2-propanol, ethylene or trimethylamine) was then injected into the reactor through the inlet orifice. About half an hour was allowed to elapse so that a thermodynamic equilibrium could be established between the adsorbed volatile substance and that remaining in the gas phase. Once the concentration measured by gas chromatograph had stabilised, the lamp was lit to initiate the reaction. Prior calibrations of the substance to be degraded in the gas phase at various concentrations were also performed.

After the lamp had been lit, gas samples were taken from the reactor at predetermined times by means of a leakproof syringe. The gas sampled from the reactor was then injected into the gas chromatograph in order to monitor the concentration of the volatile substance subjected to degradation in the reactor.

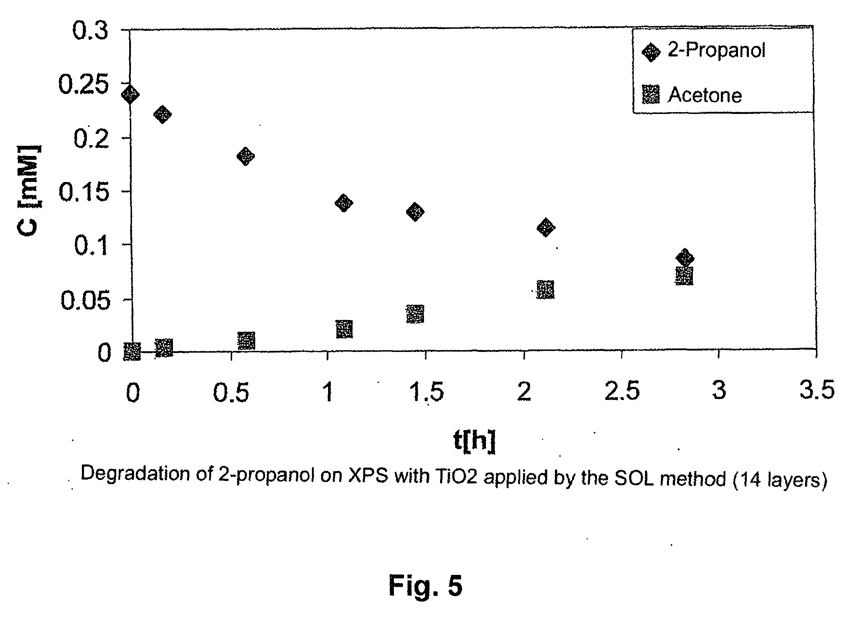

Figure 5 shows a graph (concentration vs. time) reporting the outcome of a test of the photocatalytic degradation of 2-propanol on XPS polymer leaf coated by dip coating with a TiO₂ sol (14 layer film). The graph also shows the concentration of acetone, the product of partial oxidation, which, due to the extended reaction times, is nevertheless also degraded. The TiO₂ formed (in this case together with the acetone formed) is balanced by the reacted carbon, which compensates the reactant used by the reaction.

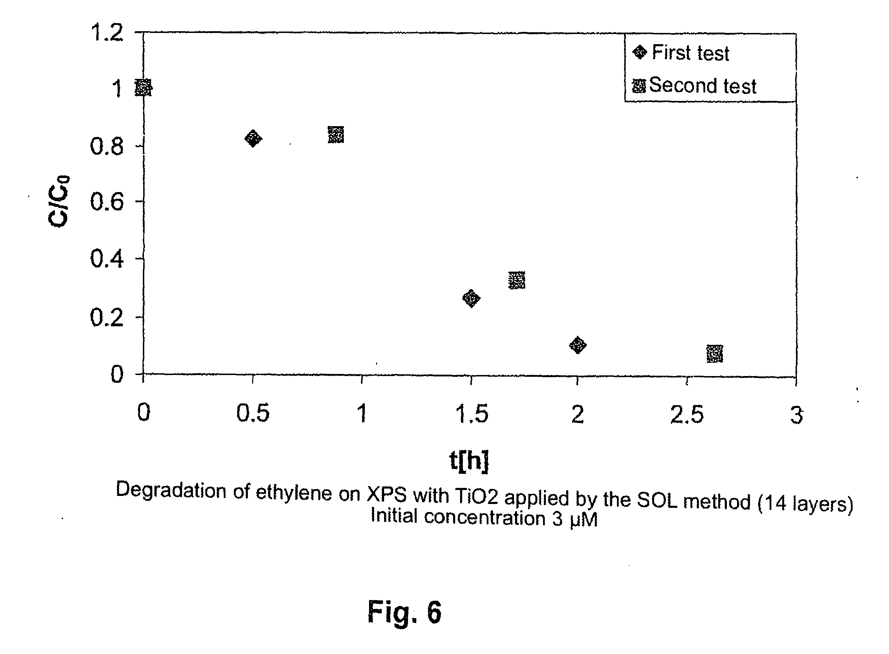

Figure 6 shows a graph (ratio of concentration (C) / initial concentration (Cₒ) vs. time) reporting the outcome of two successive tests of the degradation of ethylene (initial concentration 3 µM) on XPS polymer leaf coated with TiO₂ from a sol (14 layer film).

It may be noted that the catalyst continues to function and thus deactivation phenomena over time do not occur, thus making the use of the photocatalytic material over a long period of time possible and advantageous.

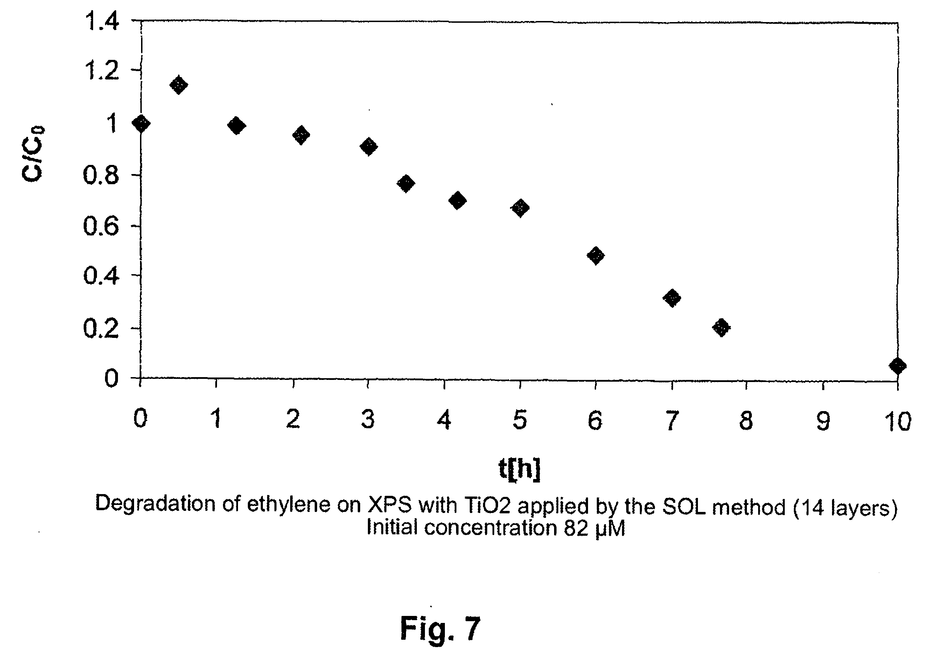

Figure 7 shows a graph (ratio of concentration (C) / initial concentration (Cₒ) vs. time) reporting the outcome of a test of the degradation of ethylene at a higher initial concentration than that in the tests of Figure 6 on XPS polymer leaf coated with TiO₂ from a sol (14 layer film). When the concentration of ethylene is increased approximately 30 fold, from 3 to 82 µM, it is observed that complete degradation is achieved in a reasonable time (only 4 times longer: from approximately 2.5 hours to 10 hours).

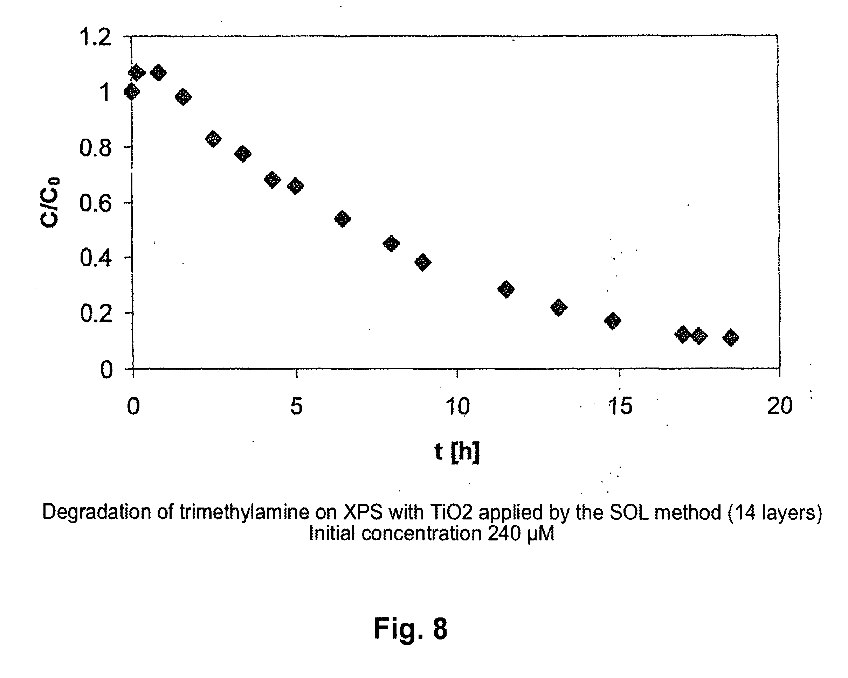

Figure 8 shows a graph (ratio of concentration (C) / initial concentration (Cₒ) vs. time) reporting the outcome of a test of the degradation of trimethylamine (initial concentration 240 µM) on XPS polymer leaf coated with TiO₂ from a sol (14 layer film). In this case, unlike with ethylene, not only CO₂ was found to be present, but also organic reaction intermediates which could not be identified. These too, however, are completely degraded. The trimethylamine was injected into the reactor by evaporating 60 µl of the aqueous commercial solution (45% by weight).

### EXAMPLE 7

### Photoactivity tests on PET polymer leafs coated with TiO₂ from a gel by dip coating

In accordance with the procedure described in Example 6, photoactivity tests were carried out on the PET polymer leafs of Example 4 coated with TiO₂ from a gel by dip coating with regard to gas phase degradation of the following volatile organic substances: 2-propanol, ethylene and trimethylamine.

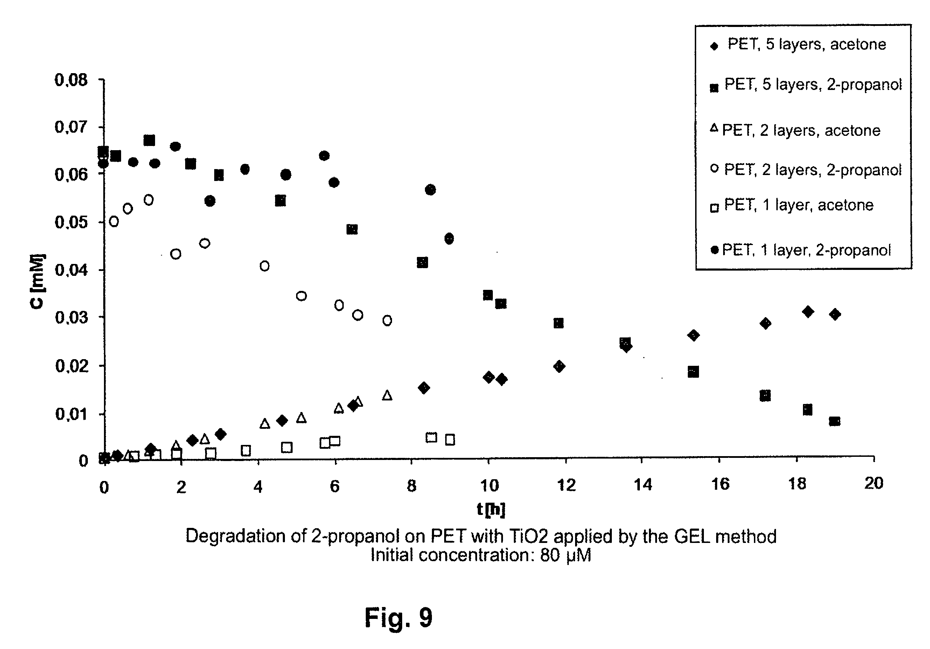

Figure 9 shows a graph (concentration vs. time) reporting the outcome of tests of the degradation of 2-propanol (initial concentration 80 µM) on PET polymer leaf coated with TiO₂ film from a gel with different numbers of layers (1 layer, 2 layer and 5 layer film respectively). The reactivity values of the TiO₂ films with different numbers of layers proved similar and in particular satisfactory reactivity was observed using a TiO₂ film having just two layers. The concentration of acetone, a reaction intermediate, is also shown. The carbon dioxide formed closes the carbon balance.

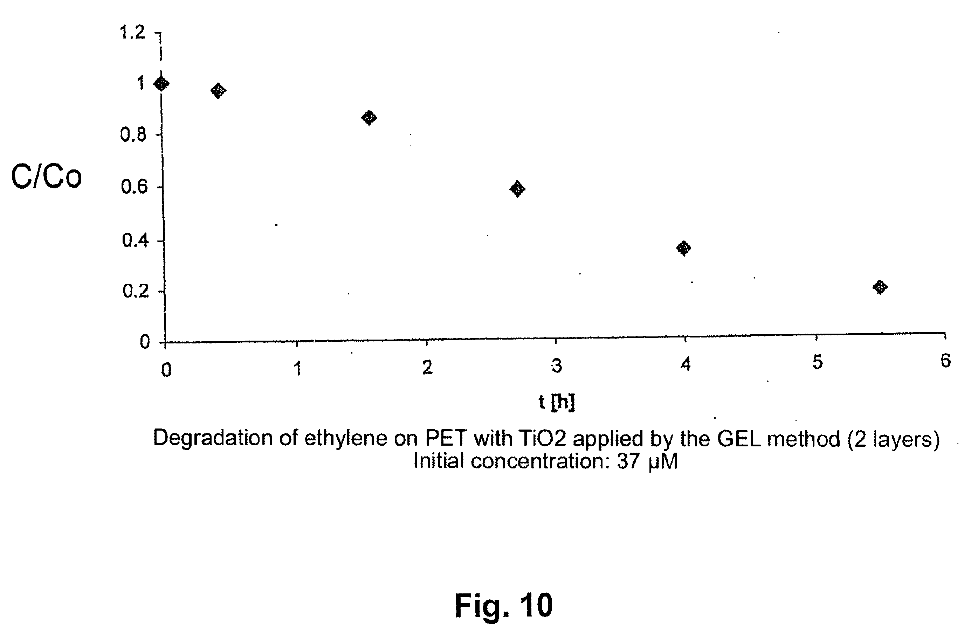

Figure 10 shows a graph (ratio of concentration (C) / initial concentration (Cₒ) vs. time) reporting the outcome of tests of the degradation of ethylene (initial concentration 37 µM) on PET polymer leaf coated with TiO₂ from a gel (2 layer film).

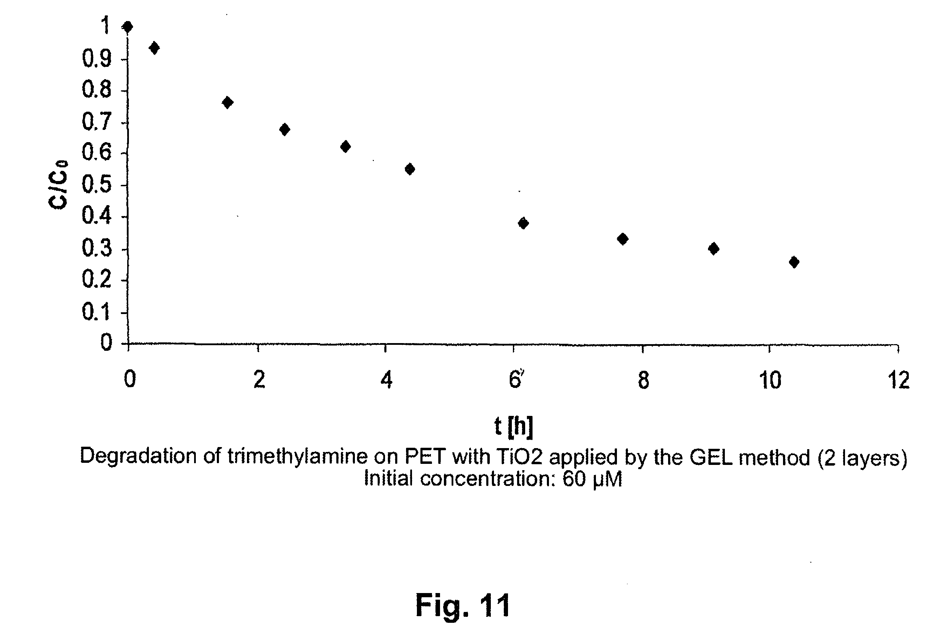

Figure 11 shows a graph (ratio of concentration (C)/initial concentration (Cₒ) vs. time) reporting the outcome of tests of the degradation of trimethylamine (initial concentration 60 µM) on PET polymer leaf coated with TiO₂ from a gel (2 layer film).

As may be noted, reactivity of the TiO₂ film is also satisfactory with regard to trimethylamine and ethylene, which are substantially completely degraded in reasonable times.

### EXAMPLE 8

### Photoactivity tests on OPS polymer leafs coated with TiO₂ gel by dip coating

In accordance with the procedure described in Example 6, photoactivity tests were carried out on the OPS polymer leafs of Example 4 coated with TiO₂ gel by dip coating with regard to gas phase degradation of ethylene and trimethylamine.

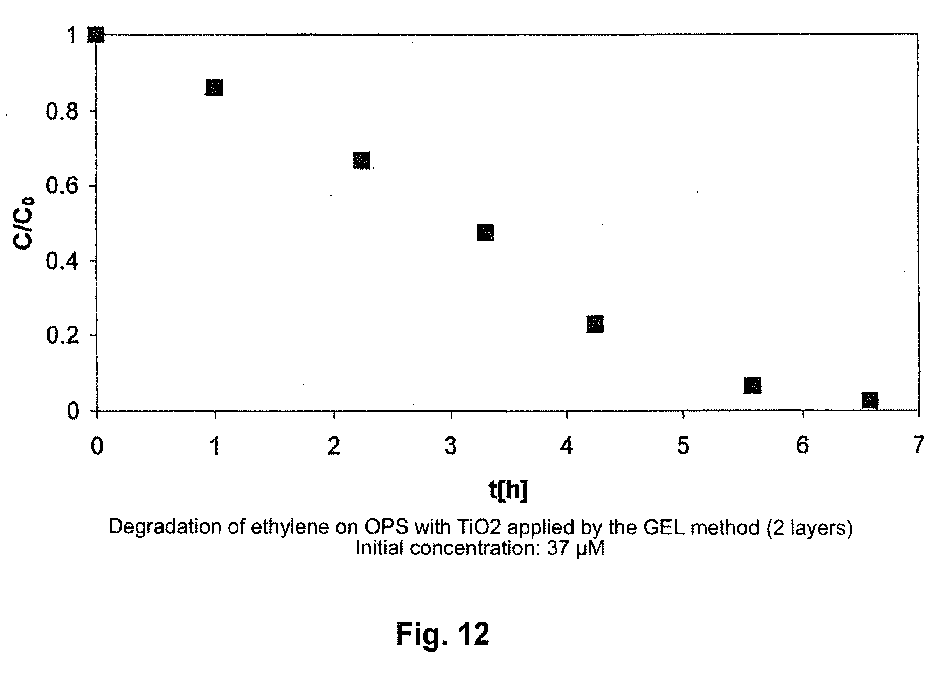

Figure 12 shows a graph (ratio of concentration (C) / initial concentration (Cₒ) vs. time) reporting the outcome of tests of the degradation of ethylene (initial concentration 37 µM) on OPS polymer leaf coated with TiO₂ from a gel (2 layer film).

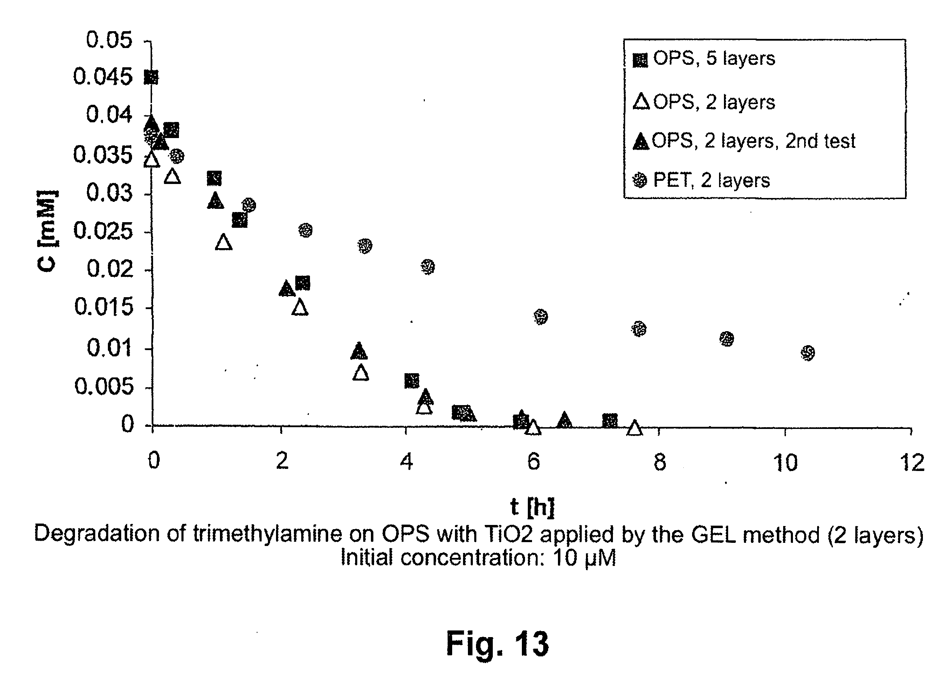

Figure 13 shows a graph (concentration vs. time) reporting the outcome of tests of the degradation of trimethylamine (initial concentration 10 µM) on OPS polymer leaf coated with TiO₂ from a gel (film with 2 or 5 layers). It may be observed that the three curves are very similar and that the two layer film does not exhibit any loss of activity. The test carried out with PET is shown by way of comparison. It may be seen that reactivity is lower, probably because of lower roughness and thus a smaller surface area exposed to the light, available for the reaction.

As may be noted, reactivity of the TiO₂ film is also satisfactory both with regard to trimethylamine and with regard to ethylene, which are substantially completely degraded in reasonable times.

### EXAMPLE 9

### Photoactivity tests on PP polymer leafs coated with TiO₂ by dip coating

In accordance with the procedure described in Example 6, photoactivity tests were carried out on PP polymer leafs coated with TiO₂ from a gel by dip coating with regard to gas phase degradation of ethylene and trimethylamine.

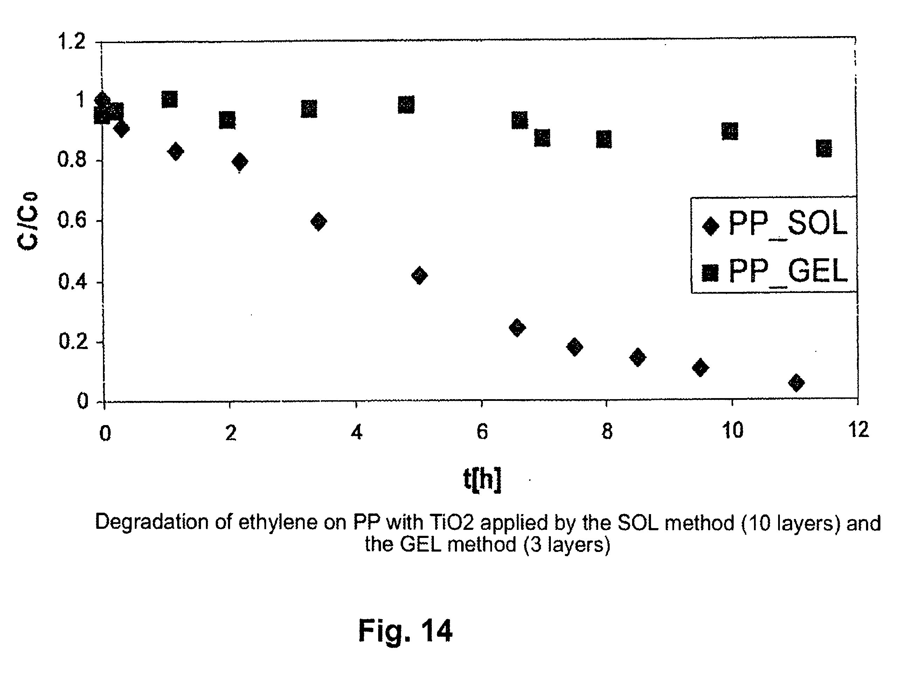

Figure 14 shows a graph (ratio of concentration (C) / initial concentration (Cₒ) vs. time) reporting the outcome of tests of the degradation of ethylene on PP polymer leaf coated with a 3 layer TiO₂ film from a gel (obtained in accordance with the procedure of Example 4) and on PP polymer leaf coated with a 10 layer TiO₂ film from a sol (obtained in accordance with the procedure of Example 3).

Satisfactory reactivity is observed only on the sample with a 10 layer TiO₂ sol film and this is probably due to the fact that, given an identical number of layers deposited by dip coating, an appreciably smaller quantity of TiO₂ is deposited by the gel method. It will furthermore be observed that the only reaction product is carbon dioxide, the quantity of which proved to be equal to the quantity of reacted carbon, so confirming complete mineralisation of the organic species.

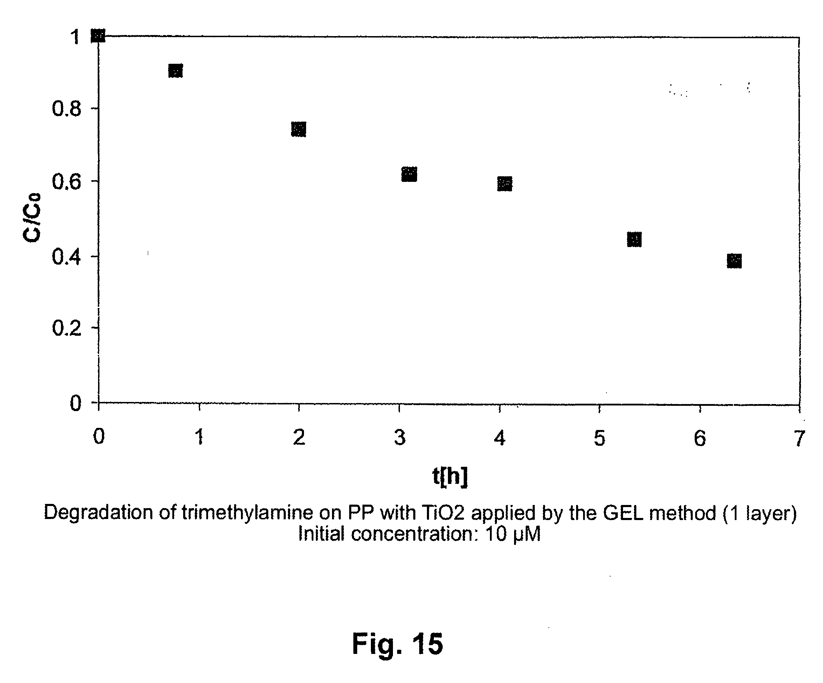

Figure 15 shows a graph (ratio of concentration (C) / initial concentration (Cₒ) vs. time) reporting the outcome of a test of the degradation of trimethylamine (initial concentration 10 µM) on PP polymer leaf coated with a single layer TiO₂ film from a gel (in accordance with the procedure of Example 4).

Despite the uniformity of the TiO₂ film not being as high as in the case of the other polymers, the sample is equally active and approximately 60% of the substrate is degraded in approximately 6 hours.

### EXAMPLE 10

### Preparation of TiO₂ sol according to an alternative embodiment of the invention

A TiO₂ sol was prepared in accordance with the procedure described in Example 1, except that in this case 15 ml of (Ti(OPrⁱ)₄) were added dropwise to the acidic aqueous solution obtained by mixing 1 ml of HNO₃ (nitric acid), 10 ml of CH₃COOH (acetic acid) and 89 ml of H₂O.

The resultant sol was used to coat XPS polymer leafs with a TiO₂ film by dip coating in accordance with the procedure of Example 3 or by means of spraying (spray coating). Spray coating was performed by means of a manual atomiser so as to form a TiO₂ film obtained by depositing on said XPS leaf a predetermined number of layers and, between the application of one layer and the subsequent layer, carrying out a gentle heat treatment at 50°C for 2 hours in accordance with *per se* conventional procedures.

The samples of XPS coated with TiO₂ film were tested for photocatalytic activity with regard to the degradation of 2-propanol, ethylene and trimethylamine in accordance with the procedure described in Example 6 and good results were obtained which were comparable to those obtained from the tests shown in Example 6 on similar samples of XPS coated with TiO₂ by dip coating.

### EXAMPLE 11

### Preparation of TiO₂ gel according to an alternative embodiment of the invention

A TiO₂ sol was produced in accordance with the procedure described in Example 10. The TiO₂ sol obtained after 16 hours of hydrolysis of the Ti(OPrⁱ)₄ was subjected to dialysis using a cellulose membrane with pore cut off size of MW 12.400 and keeping the TiO₂ sol in demineralised water (in a 5 1 beaker) for 48 hours to remove the ionic species (nitrate and acetate) and of raise the pH to a value of between 4 and 5. The water was replaced every 6 hours. A viscous transparent gel having a pH of between 4 and 5 was obtained in this manner.

This gel exhibited elevated stability (up to 1-2 months) if kept at 5°C in a refrigerator.

A certain amount of ethanol was added to the gel (approximately 15% by volume of added ethanol relative to the volume of the gel) and, after having stirred the solution for approximately 15 minutes, dip coating was carried out in accordance with the procedure of Example 3 on the PET, OPS and PP polymer leafs.

The samples of PET, OPS and PP coated with TiO₂ film were tested for photocatalytic activity with regard to the degradation of 2-propanol, ethylene and trimethylamine in accordance with the procedure described in Example 5 and good results were obtained which were comparable to those obtained from the tests shown in Examples 7-9 on similar samples of PET, OPS and PP.

### EXAMPLE 12

### Preparation of TiO₂ suspensions according to the invention

Two suspensions according to the invention were prepared using two separate procedures.

In a first procedure, 5 ml of Ti(OPrⁱ)₄ were added dropwise to an acidic aqueous solution obtained by mixing 1 ml of HNO₃ (nitric acid), 10 ml of CH₃COOH (acetic acid) and 89 ml of H₂O.

The resultant mixture was raised to the boiling temperature of the solvent and left to boil for 45 minutes. The volume diminished by approximately 50% and a white suspension, designated suspension "A", was obtained.

In the second procedure, 5 ml of Ti(OPrⁱ)₄ were added dropwise to an acidic aqueous solution obtained by mixing 1 ml of HNO₃ (nitric acid), 10 ml of CH₃COOH (acetic acid) and 89 ml of H₂O.

In this case, the mixture was placed in a leakproof Pyrex glass bottle and kept at 90°C in an oven for a period of 10 h, so obtaining an opaque suspension, designated suspension "B".

Suspensions A and B were applied onto respective XPS polymer leafs in accordance with the dip coating procedure described in Example 3 to form a 3 layer TiO₂ film.

The XPS samples coated with TiO₂ were tested for photocatalytic activity with regard to the degradation of 2-propanol in accordance with the procedure described in Example 6 (with the exception of the fact that air is present in the reactor instead of oxygen). For the purposes of comparison, the photocatalytic activity of an XPS sample coated directly with a TiO₂ sol (single layer film) by dip coating (sample C) was also tested.

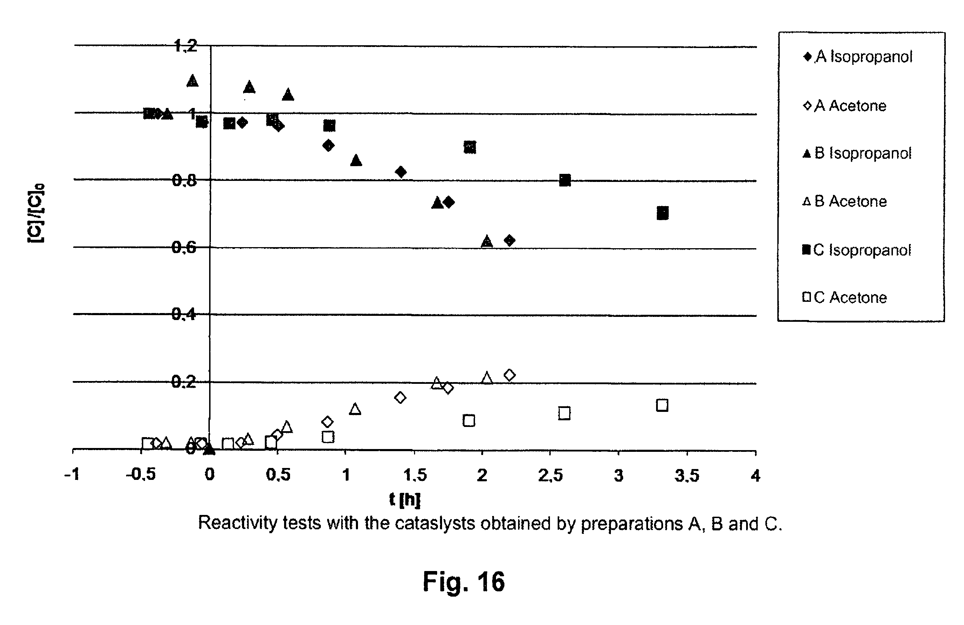

Figure 16 shows a graph (ratio of concentration (C) / initial concentration (Cₒ) vs. time) reporting the outcome of tests of the degradation of 2-propanol (or isopropanol) on the above-stated XPS samples.

It may be noted that the XPS samples coated by means of suspension A and suspension B exhibit considerable levels of reactivity and which are entirely comparable with one another and greater than that of the XPS sample coated directly with a sol.

Preparation of the XPS sample by means of suspension B proved to be the best compromise between reactivity and simplicity of preparation.

### EXAMPLE 13

### Preparation of TiO₂ suspensions according to an alternative embodiment of the invention

Two suspensions were prepared following a procedure similar to the second procedure described in Example 12.

In particular, the first suspension was prepared by adding 5 ml of Ti(OPrⁱ)₄ dropwise to an acidic aqueous solution obtained by mixing 1 ml of HNO₃ (nitric acid), 5 ml of CH₃COOH (acetic acid) and 94 ml of H₂O.

The resultant mixture was placed in a leakproof Pyrex glass bottle and kept at 90°C in an oven for a period of 15 h, so obtaining an opaque suspension, designated suspension "D".

The second suspension was prepared by adding 5 ml of (Ti(OPrⁱ)₄) dropwise to an aqueous solution acidified with nitric acid but containing no acetic acid obtained by mixing 1 ml of HNO₃ (nitric acid) with 99 ml of H₂O.

The resultant mixture was likewise placed in a leakproof Pyrex glass bottle and kept at 90°C in an oven for a period of 15 h, so obtaining an opaque suspension, designated suspension "E".

Suspensions D and E were applied onto respective XPS polymer leafs in accordance with the dip coating procedure described in Example 3 to form a 3 layer TiO₂ film.

The XPS samples coated with TiO₂ were tested for photocatalytic activity with regard to the degradation of 2-propanol in accordance with the procedure described in Example 6 (with the exception of the fact that air is present in the reactor instead of oxygen).

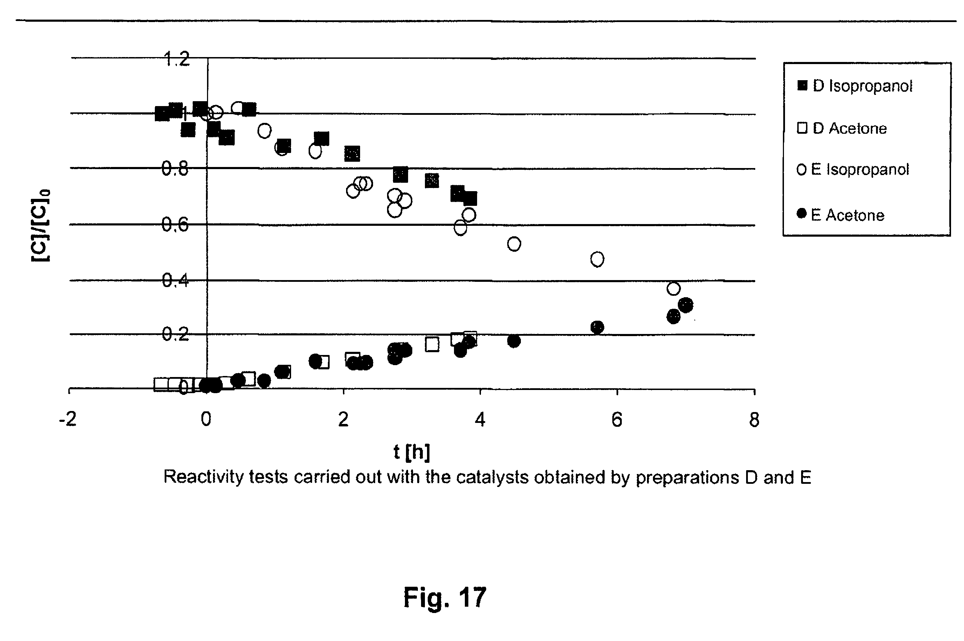

Figure 17 shows a graph (ratio of concentration (C) / initial concentration (Cₒ) vs. time) reporting the outcome of tests of the degradation of 2-propanol (or isopropanol) on the above-stated XPS samples.

It may be noted that the XPS samples coated with TiO₂ by means of suspension D and suspension E exhibit considerable levels of reactivity which are entirely comparable with one another.

It was furthermore noted that TiO₂ suspension "E" (the one obtained using an acidic solution containing no acetic acid) does not remain stable for more than one week and must be used quickly, because after one week colloidal TiO₂ forms which gradually precipitates out.

### EXAMPLE 14

### Reactivity tests on thermoformed XPS tubs coated with TiO₂ from a sol

The TiO₂ sol obtained in accordance with the procedure of Example 1 was deposited by manual spraying onto an XPS polymer leaf of a length of approximately 4 m to form a three layer TiO₂ film.

Each time deposition of a layer was completed, a heat treatment was carried out by passing an infrared lamp over the polymer support at a distance of approximately 10 cm.

The polymer leaf coated with TiO₂ film was then conventionally thermoformed so as to obtain a plurality of tubs.

The photoactivity of samples of said tubs with regard to the degradation of ethylene was tested using the procedure of Example 6 in the presence of air in the reactor instead of oxygen.

The tests were carried out using two methods, specifically:
1) previously introducing ethylene into the reactor (initial concentration 0.02 mM) and observing the degradation thereof,
2) previously introducing an apple into the reactor and observing the degradation of the ethylene liberated thereby.

In method 2), the lamp was lit once the concentration of ethylene, conveniently monitored, has reached a plateau.

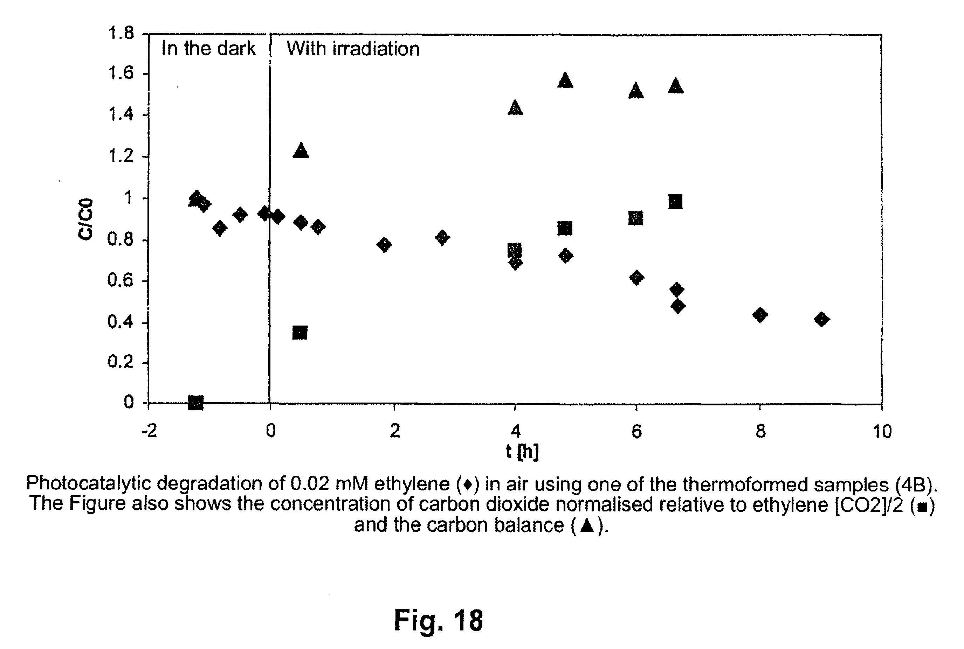

Figure 18 shows a graph (ratio of concentration (C) / initial concentration (Cₒ) vs. time) reporting the outcome of a test of the degradation of ethylene (introduced into the reactor from outside), performed in accordance with method 1, on a sample of a tub designated 4B.

Good photocatalytic activity is noted with regard to the degradation of ethylene in air. Figure 18 also shows the concentration of carbon dioxide normalised relative to ethylene and the carbon balance

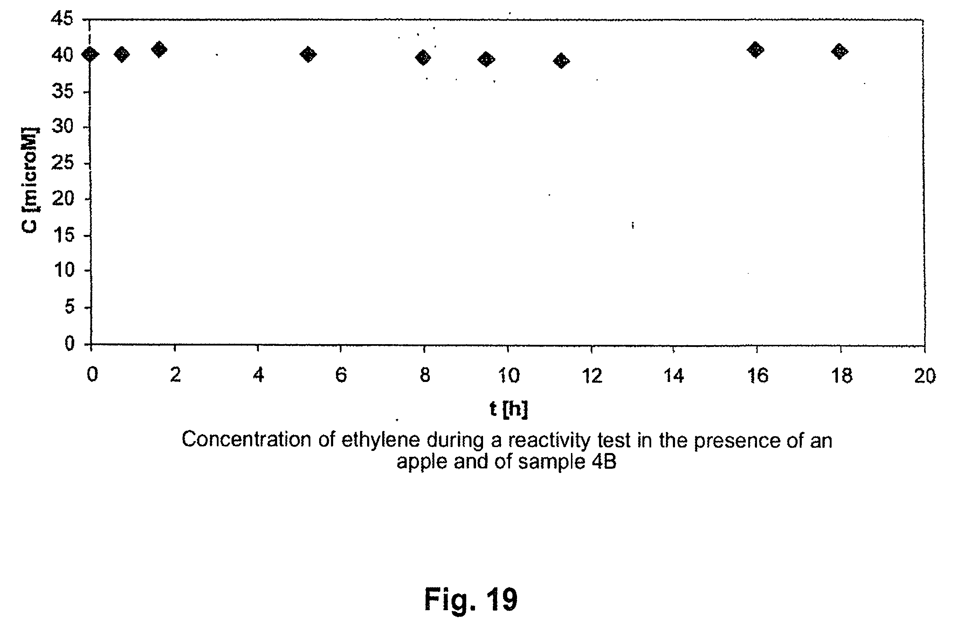

Figure 19 shows a graph (concentration vs. time) reporting the outcome of the test of degradation of ethylene released by the apple, in accordance with method 2, on the tub sample designated 4B.

In this case, it is noted that the concentration of ethylene remains substantially constant, but this would seem to be due to the fact that, during the photocatalysis, the ethylene reacted on the polymer sample is balanced by further ethylene liberated by the apple. An equilibrium would thus be established, resulting in the maintenance of a substantially constant concentration within the reactor.

These results are considered sufficient to ensure moderately satisfactory performance and would thus make it possible to provide containers and packages for foodstuff use having good properties of adhesion and photoactivity. By virtue of the above-stated properties, such containers and tubs constitute an advance in the art and overcome the technical problems associated with the prior art.

## Claims

1. Method for the production of a polymer leaf of expanded polymeric material coated with titanium dioxide (TiO₂) on at least one of the surfaces thereof, the method comprising the steps of:
a) mixing an organic TiO₂ precursor with an acidic aqueous solution;
b) hydrolysing said organic TiO₂ precursor in said acidic solution to yield a TiO₂ sol or suspension in which said TiO₂ is in a substantially crystalline and photocatalytically active form with particles of nanometric and/or sub-nanometric dimensions,
c) optionally converting said TiO₂ sol into a TriO2 gel, said TiO₂ gel subsequently being mixed with an alcohol;
d) applying said TriO2 sol or suspension, or said TiO₂ gel mixed with alcohol, onto a leaf of expanded polymeric material in such a manner as to coat at least one surface of the polymer leaf with a film of TriO2 in which said TiO₂ is substantially in a photocatalytically active crystalline form with particles of nanometric and/or sub-nanometric dimensions.

2. A method according to claim 1, wherein the TiO₂ of the sol or of the suspension obtained in step b) has a substantially crystalline form in the sole anatase phase.

3. A method according to claim 1 or 2, wherein in step c) the TiO₂ sol is subjected to dialysis thus obtaining a TiO₂ gel and said TiO₂ gel is mixed with an alcohol in a proportion of between 10 and 20% vol./vol. (volume of added alcohol relative to gel volume).

4. A method according to claim 3, wherein said alcohol is selected from the group comprising ethanol, isopropanol and isobutanol.

5. A method according to any one of the preceding claims, wherein said organic TiO₂ precursor is selected from the titanium alkoxides having the formula Ti(OR)₄, wherein R is a linear or branched C₁-C₆ alkyl group.

6. A method according to claim 5, wherein said organic TiO₂ precursor is titanium tetraisopropoxide or titanium tetraisobutoxide.

7. A method according to any one of the preceding claims, wherein in step a) said organic precursor is mixed with said acidic aqueous solution in a proportion comprised in the range of 1-25% vol./vol. (volume of organic precursor to volume of the acidic aqueous solution)..

8. A method according to any one of the preceding claims, wherein the acid of said aqueous solution is selected from the group comprising acetic acid, nitric acid, formic acid and combinations thereof.

9. A method according to claim 8, wherein said acidic aqueous solution contains 0.1-5% (vol./vol.) of nitric acid and 0-10% (vol./vol.) of acetic acid.

10. A method according to any one of the preceding claims, wherein step b) is performed at a temperature of between room temperature (25°C) and the boiling temperature of the solvent (water) for a period of time of between 10 minutes and 30 hours.

11. A method according to claim 10, wherein step b) is performed at a temperature of between 40°C and 80°C for a period of 4-24 hours thus obtaining a TriO₂ sol or at a temperature of between 90°C and the boiling temperature of the solvent for a period of time of between 10 minutes and 30 hours, thus obtaining a TiO₂ suspension.

12. A method according to any one of preceding claims 3 to 11, wherein said dialysis is carried out by placing the sol obtained in step b) in a dialysis membrane for a period of between 24 and 72 hours, said membrane having a pore cut *off* size appropriate for allowing the removal of ionic species originating from the additives (acid/acids) used in the hydrolysis step b).

13. A method according to claim 12, wherein said dialysis membrane is a cellulose membrane having pore cut off size of MW 12.400.

14. A method according to any one of preceding claims 3 to 13 above, wherein said dialysis in step c) is carried out for a period which is necessary to obtain a final TiO₂ gel with a pH of between 4 and 5.

15. A method according to any one of the preceding claims, wherein in step d) the application of the TiO₂ sol, suspension or gel onto the expanded polymeric material leaf is carried out by immersion in a bath (dip coating), spraying (spray coating), simple coating or spreading followed by removal of the solvent by evaporation and/or heating.

16. A method according to any one of the preceding claims, wherein the expanded polymeric material forming the polymer leaf consists of a polymer selected from the group comprising: polystyrene or polystyrol, bi-oriented polystyrene (OPS), extruded expanded polystyrene (XPS), polyethylene terephthalate (PET) and polypropylene (PP).

17. A method according to claim 16, wherein said expanded polymeric material is obtained with substantially closed cells and is extruded expanded polystyrene having substantially closed cells.

18. A method according to claim 16 or 17, wherein, when the polymer leaf is of XPS, a TiO₂ sol or suspension as obtained in step b) is applied thereto, while, when the polymer leaf is of PET, OPS or PP, a gel as obtained in step c) is applied to the leaf.

19. A method according to any one of the preceding claims, wherein said TriO₂ film forming the coating of at least one surface of said polymer leaf has an overall thickness of between 100 nm and 50 µm.

20. A method according to claim 19, wherein said TiO₂ film forming the coating of at least one surface of said polymer leaf has an overall thickness of between 300 nm and 1.5µm.

21. A polymer leaf of expanded polymeric material, , **characterised in that** it has a coating on at least one of the surfaces thereof formed by a TiO₂ film in crystalline form and having TiO₂ particles of nanometric and/or sub-nanometric dimensions.

22. A polymer leaf according to claim 21, wherein said expanded polymeric material is selected from the group comprising polystyrene or polystyrol, bi-oriented polystyrene (OPS), extruded expanded polystyrene (XPS), polyethylene terephthalate (PET) and polypropylene (PP).

23. A polymer leaf according to claim 22, wherein said TiO₂ film forming the coating of at least one surface of said polymer leaf has an overall thickness of between 100 nm and 50 µm.

24. A polymer leaf according to claim 23, wherein said TiO₂ film forming the coating of at least one surface of said polymer leaf has an overall thickness of between 300 nm and 15µm.

25. A container of plastics material for foodstuffs having a bottom and side walls finishing at the top in a peripheral edge, **characterised in that** it comprises a layer consisting of a polymer leaf according to any of claims 21-24 wherein said TiO₂ film constitutes the coating of the surface facing towards the foodstuff.

26. A package of plastics material for foodstuffs, **characterised in that** it comprises:
- a container of plastics material for foodstuffs according to claim 25,
- a foodstuff and/or food product arranged on the bottom of said container,
- means for sealing said container.

## Patentansprüche

1. Verfahren zur Herstellung einer Polymerfolie aus einem auf wenigstens einer Oberfläche mit Titandioxid (TiO₂) beschichtetem, geschäumtem Polymermaterial, wobei das Verfahren die Schritte umfasst:
a) Mischen eines organischen TiO₂ Vorläufers mit einer sauren, wässrigen Lösung;
b) Hydrolisieren des organischen TiO₂ Vorläufers in der sauren Lösung, um ein TiO₂ Sol oder eine Suspension zu erhalten, in welcher das TiO₂ in einer im Wesentlichen kristallinen und photokatalytisch aktiven Form mit Teilchenabmessungen im Nanomer- und/oder Subnanomerbereich vorliegt,
c) gegebenenfalls Umwandeln des TiO₂ Sols in ein TiO₂ Gel, welches TiO₂ Gel nachfolgend mit einem Alkohol gemischt wird;
d) Anwenden des TiO₂ Sols oder der Suspension oder des mit Alkohol vermischten TiO₂ Gels auf eine Folie aus geschäumtem Polymermaterial in einer derartigen Weise, um wenigstens eine Oberfläche der Polymerfolie mit einer Schicht aus TiO₂ zu beschichten, in welcher das TiO₂ im Wesentlichen in einer photokatalytisch aktiven, kristallinen Form mit Teilchen im Nanomer- und/oder Subnanomerbereich vorliegt.

2. Verfahren nach Anspruch 1, worin das TiO₂ des Sols oder der Suspension, das bzw. die in Schritt b) erhalten wurde, eine im Wesentlichen kristalline Form in der Sol-Anatas-Phase aufweist.

3. Verfahren nach Anspruch 1 oder 2, worin in Schritt c) das TiO₂ Sol einer Dialyse unterworfen wird, wodurch ein TiO₂ Gel erhalten wird und dieses TiO₂ Gel mit einem Alkohol in einem Verhältnis zwischen 10 und 20 % Vol./Vol. (Volumen zugesetzter Alkohol in Bezug auf Gelvolumen) vermischt wird.

4. Verfahren nach Anspruch 3, worin der Alkohol aus der Gruppe umfassend Ethanol, Isopropanol und Isobutanol gewählt wird.

5. Verfahren nach einem der vorhergehenden Ansprüche, worin der organische TiO₂ Vorläufer aus Titanalkoxiden der Formel Ti(OR)₄, worin R eine lineare oder verzweigte C₁-C₆ Alkylgruppe ist, gewählt wird.

6. Verfahren nach Anspruch 5, worin der organische TiO₂ Vorläufer Titantetraisopropoxid oder Titantetraisobutoxid ist.

7. Verfahren nach einem der vorhergehenden Ansprüche, worin in Schritt a) der organische Vorläufer mit der sauren, wässrigen Lösung in einem Verhältnis von 1-25 % Vol./Vol. (Volumen des organischen Vorläufers zu Volumen der sauren, wässrigen Lösung) gemischt wird.

8. Verfahren nach einem der vorhergehenden Ansprüche, worin die Säure der wässrigen Lösung aus der Gruppe bestehend aus Essigsäure, Salpetersäure, Ameisensäure und Kombinationen davon gewählt wird.

9. Verfahren nach Anspruch 8, worin die saure, wässrige Lösung 0 (Vol./Vol.) Salpetersäure und 0-10 % (Vol./Vol.) Essigsäure enthält.

10. Verfahren nach einem der vorhergehenden Ansprüche, worin Schritt b) bei einer Temperatur zwischen Raumtemperatur (25 °C) und der Siedetemperatur des Lösungsmittels (Wasser) für einen Zeitraum zwischen 10 Minuten und 30 Stunden durchgeführt wird.

11. Verfahren nach Anspruch 10, worin Schritt b) bei einer Temperatur zwischen 40 °C und 80 °C für einen Zeitraum von 4-24 Stunden, wodurch ein Ti0₂ Sol erhalten wird, oder bei einer Temperatur zwischen 90 °C und der Siedetemperatur des Lösungsmittels für einen Zeitraum zwischen 10 Minuten und 30 Stunden, wobei eine Ti0₂ Suspension erhalten wird, durchgeführt wird.

12. Verfahren nach einem der vorhergehenden Ansprüche 3 bis 11, worin die Dialyse durch Anordnen des in Schritt b) erhaltenen Sols in einer Dialysemembran für einen Zeitraum zwischen 24 Stunden und 72 Stunden durchgeführt wird, welche Membran eine *Porengrenzgröße* aufweist, die für die Entfernung von ionischen Spezies, die aus den Additiven (Säure/Säuren), die in der Hydrolyse Schritt b) verwendet wurden, stammen, geeignet ist.

13. Verfahren nach Anspruch 12, worin die Dialysemembran eine Zellulosemembran ist, die eine *Porengrenzgröße* von MW 12.400 aufweist.

14. Verfahren nach einem der vorhergehenden Ansprüche 3 bis 13, worin die Dialyse in Schritt c) für einen Zeitraum durchgeführt wird, welcher notwendig ist, um abschließend ein TiO₂ Gel mit einem pH zwischen 4 und 5 zu erhalten.

15. Verfahren nach einem der vorhergehenden Ansprüche, worin in Schritt d) die Anwendung des TiO₂ Sols, der Suspension oder des Gels auf der geschäumten Polymermaterialfolie durch Tauchen in ein Bad (Tauchbeschichten), Sprühen (Sprühbeschichten), einfaches Beschichten oder Ausbreiten bzw. Verteilen gefolgt durch ein Entfernen des Lösungsmittels durch Abdampfen und/oder Erhitzen durchgeführt wird.

16. Verfahren nach einem der vorhergehenden Ansprüche, worin das die Polymerfolie bildende, geschäumte Polymermaterial aus einem Polymer besteht, gewählt aus der Gruppe, umfassend: Polystyren bzw. Polystyrol, doppelt gerecktes Polystyrol (OPS), extrudiertes, geschäumtes Polystyrol (XPS), Polyethylenterphthalat (PET) und Polypropylen (PP).

17. Verfahren nach Anspruch 16, worin das geschäumte Polymermaterial mit im Wesentlichen geschlossenen Zellen erhalten wird und extrudiertes, geschäumtes Polystyrol mit im Wesentlichen geschlossenen Zellen ist.

18. Verfahren nach Anspruch 16 oder 17, worin, wenn die Polymerfolie aus XPS besteht, ein TiO₂ Sol oder eine Suspension, wie sie in Schritt b) erhalten wird, darauf angewandt wird, während, wenn die Polymerfolie aus PET, OPS oder PP besteht, ein Gel, wie es in Schritt c) erhalten wird, auf der Folie angewandt wird.

19. Verfahren nach einem der vorhergehenden Ansprüche, worin die die Beschichtung von wenigstens einer Oberfläche der Polymerfolie bildende TiO₂ Schicht eine Gesamtdicke zwischen 100 nm und 50 µm aufweist.

20. Verfahren nach Anspruch 19, worin die die Beschichtung von wenigstens einer Oberfläche der Polymerfolie bildende TiO₂ Schicht eine Gesamtdicke zwischen 300 nm und 1,5 µm aufweist.

21. Polymerfolie aus geschäumtem Polymermaterial, **dadurch gekennzeichnet, dass** sie auf wenigstens einer ihrer Oberflächen eine Beschichtung aufweist, die aus einer TiO₂ Schicht in kristalliner Form besteht und TiO₂ Teilchenabmessungen im Nanomer- und/oder Subnanomerbereich aufweist.

22. Polymerfolie nach Anspruch 21, worin das expandierte Polymermaterial aus der Gruppe umfassend Polystyren bzw. Polystyrol, doppelt gerecktes Polystyrol (OPS), extrudiertes, geschäumtes Polystyrol (XPS), Polyethylenterephthalat (PET) und Polypropylen (PP) gewählt ist.

23. Polymerfolie nach Anspruch 22, worin die die Beschichtung von wenigstens einer Oberfläche der Polymerfolie bildende TiO₂ Schicht eine Gesamtdicke zwischen 100 nm und 50 µm aufweist.

24. Polymerfolie nach Anspruch 23, worin die die Beschichtung von wenigstens einer Oberfläche der Polymerfolie bildende TiO₂ Schicht eine Gesamtdicke zwischen 300 nm und 1,5 µm aufweist.

25. Kunststoffbehälter für Nahrungsmittel mit einem Boden und Seitenwänden, die an der Oberseite in einer Umfangskante enden, **dadurch gekennzeichnet, dass** er eine Schicht bestehend aus einer Polymerfolie nach einem der Ansprüche 21-24 umfasst, worin die TiO₂ Schicht die Beschichtung der zu dem Nahrungsmittel schauenden Oberfläche ausbildet.

26. Kunststoffverpackung für Nahrungsmittel, **dadurch gekennzeichnet, dass** sie umfasst:
- einen Behälter aus Kunststoffmaterial für Nahrungsmittel nach Anspruch 25,
- ein Nahrungsmittel und/oder Nahrungsprodukt, das auf dem Boden des Behälters angeordnet ist,
- Mittel zum Abdichten bzw. Verschließen des Behälters.

## Revendications

1. Procédé de production d'une feuille de polymère de matériau polymère expansé recouverte de dioxyde de titane (TiO₂) sur au moins l'une des surfaces de celle-ci, le procédé comprenant les étapes consistant à :
a) mélanger un précurseur de TiO₂ organique à une solution aqueuse acide ;
b) hydrolyser ledit précurseur de TiO₂ organique dans ladite solution acide pour obtenir un sol ou une suspension de TiO₂ dans lequel ledit TiO₂ est sous une forme substantiellement cristalline et photocatalytiquement active avec des particules de dimensions nanométriques et/ou sub-nanométriques,
c) optionnellement convertir ledit sol de TiO₂ en un gel de TiO₂, ledit gel de TiO₂ étant ensuite mélangé à un alcool ;
d) appliquer ledit sol ou ladite suspension de TiO₂, ou ledit gel de TiO₂ mélangé à un alcool, sur une feuille de matériau polymère expansé de façon à recouvrir au moins une surface de la feuille de polymère d'un film de TiO₂ dans lequel ledit TiO₂ est substantiellement sous une forme cristalline photocatalytiquement active avec des particules de dimensions nanométriques et/ou sub-nanométriques.

2. Procédé selon la revendication 1, dans lequel le TiO₂ du sol ou de la suspension obtenu(e) dans l'étape b) a une forme substantiellement cristalline dans la seule phase anatase.

3. Procédé selon la revendication 1 ou 2, dans lequel, dans l'étape c), le sol de TiO₂ est soumis à une dialyse pour ainsi obtenir un gel de Ti0₂ et ledit gel de TiO₂ est mélangé à un alcool dans une proportion comprise entre 10 et 20 % vol./vol. (volume d'alcool ajouté par rapport au volume de gel).

4. Procédé selon la revendication 3, dans lequel ledit alcool est choisi dans le groupe comprenant l'éthanol, l'isopropanol et l'isobutanol.

5. Procédé selon l'une quelconque des revendications précédentes, dans lequel ledit précurseur de TiO₂ organique est choisi parmi les alcoxydes de titane répondant à la formule Ti(OR)₄, où R représente un groupe alkyle en C₁ à C₆ linéaire ou ramifié.

6. Procédé selon la revendication 5, dans lequel ledit précurseur de TiO₂ organique est du tétraisopropoxyde de titane ou du tétraisobutoxyde de titane.

7. Procédé selon l'une quelconque des revendications précédentes, dans lequel, dans l'étape a), ledit précurseur organique est mélangé à ladite solution aqueuse acide dans une proportion comprise dans la plage allant de 1 à 25 % vol./vol. (volume de précurseur organique au volume de la solution aqueuse acide).

8. Procédé selon l'une quelconque des revendications précédentes, dans lequel l'acide de ladite solution aqueuse est choisi dans le groupe comprenant l'acide acétique, l'acide nitrique, l'acide formique et leurs combinaisons.

9. Procédé selon la revendication 8, dans lequel ladite solution aqueuse acide contient de 0,1 à 5 % (vol./vol.) d'acide nitrique et de 0 à 10 % (vol./vol.) d'acide acétique.

10. Procédé selon l'une quelconque des revendications précédentes, dans lequel l'étape b) est réalisée à une température comprise entre la température ambiante (25 °C) et la température d'ébullition du solvant (eau) pendant une durée comprise entre 10 minutes et 30 heures.

11. Procédé selon la revendication 10, dans lequel l'étape b) est réalisée à une température comprise entre 40 °C et 80 °C pendant une durée de 4 à 24 heures pour ainsi obtenir un sol de TiO₂ ou à une température comprise entre 90 °C et la température d'ébullition du solvant pendant une durée comprise entre 10 minutes et 30 heures, pour ainsi obtenir une suspension de TiO₂.

12. Procédé selon l'une quelconque des revendications précédentes 3 à 11, dans lequel ladite dialyse est réalisée en plaçant le sol obtenu dans l'étape b) dans une membrane de dialyse pendant une durée comprise entre 24 et 72 heures, ladite membrane ayant une taille limite de pores appropriée pour permettre l'élimination des espèces ioniques provenant des additifs (acide/acides) utilisés lors de l'étape d'hydrolyse b).

13. Procédé selon la revendication 12, dans lequel ladite membrane de dialyse est une membrane de cellulose ayant une taille limite de pores de MW 12,400.

14. Procédé selon l'une quelconque des revendications précédentes 3 à 13 ci-dessus, dans lequel ladite dialyse dans l'étape c) est réalisée pendant une durée qui est nécessaire pour obtenir un gel de TiO₂ final ayant un pH compris entre 4 et 5.

15. Procédé selon l'une quelconque des revendications précédentes, dans lequel, dans l'étape d), l'application du sol, de la suspension ou du gel de TiO₂ sur la feuille de matériau polymère expansé est réalisée par immersion dans un bain (revêtement par immersion), pulvérisation (revêtement par pulvérisation), simple revêtement ou enduction, suivie de l'élimination du solvant par évaporation et/ou chauffage.

16. Procédé selon l'une quelconque des revendications précédentes, dans lequel le matériau polymère expansé formant la feuille de polymère est constitué d'un polymère choisi dans le groupe comprenant : le polystyrène ou le polystyrol, le polystyrène bi-orienté (OPS), le polystyrène expansé extrudé (XPS), le téréphtalate de polyéthylène (PET) et le polypropylène (PP).

17. Procédé selon la revendication 16, dans lequel ledit matériau polymère expansé est obtenu avec des cellules substantiellement fermées et est un polystyrène expansé extrudé ayant des cellules substantiellement fermées.

18. Procédé selon la revendication 16 ou 17, dans lequel, lorsque la feuille de polymère est faite de XPS, un sol ou une suspension de TiO₂ tel(le) qu'obtenu(e) dans l'étape b) est appliqué(e) sur celle-ci, alors que lorsque la feuille de polymère est faite de PET, d'OPS ou de PP, un gel tel qu'obtenu dans l'étape c) est appliqué sur la feuille.

19. Procédé selon l'une quelconque des revendications précédentes, dans lequel ledit film en TiO₂ formant le revêtement d'au moins une surface de ladite feuille de polymère a une épaisseur totale comprise entre 100 nm et 50 µm.

20. Procédé selon la revendication 19, dans lequel ledit film en TiO₂ formant le revêtement d'au moins une surface de ladite feuille de polymère a une épaisseur totale comprise entre 300 nm et 1,5 µm.

21. Feuille de polymère de matériau polymère expansé, **caractérisée en ce qu'**elle présente un revêtement sur au moins l'une des surfaces de celle-ci constitué d'un film en TiO₂ sous forme cristalline et ayant des particules de TiO₂ de dimensions nanométriques et/ou sub-nanométriques.

22. Feuille de polymère selon la revendication 21, dans laquelle ledit matériau polymère expansé est choisi dans le groupe comprenant le polystyrène ou le polystyrol, le polystyrène bi-orienté (OPS), le polystyrène expansé extrudé (XPS), le téréphtalate de polyéthylène (PET) et le polypropylène (PP).

23. Feuille de polymère selon la revendication 22, dans laquelle ledit film en TiO₂ formant le revêtement d'au moins une surface de ladite feuille de polymère a une épaisseur totale comprise entre 100 nm et 50 µm.

24. Feuille de polymère selon la revendication 23, dans laquelle ledit film en TiO₂ formant le revêtement d'au moins une surface de ladite feuille de polymère a une épaisseur totale comprise entre 300 nm et 1,5 µm.

25. Récipient en matière plastique pour aliments ayant des parois inférieure et latérale se terminant dans la partie supérieure en une bordure périphérique, **caractérisé en ce qu'**il comprend une couche constituée d'une feuille de polymère selon l'une quelconque des revendications 21 à 24, dans lequel ledit film en TiO₂ constitue le revêtement de la surface orientée vers l'aliment.

26. Emballage en matière plastique pour aliments, **caractérisé en ce qu'**il comprend :
- un récipient en matière plastique pour aliments selon la revendication 25,
- un aliment et/ou un produit alimentaire placé au fond dudit récipient,
- des moyens pour fermer hermétiquement ledit récipient.
